# EUROPEAN PATENT APPLICATION

(11) **EP 4 592 359 A1**
(43) Date of publication of application: **30.07.2025**
(21) Application number: 23867964.1
(22) Date of filing: 28.08.2023
(51) Int. Cl.: C08L 101/00, C08J 3/20, C08K 7/02, C08L 1/00, C08L 23/10, C08L 23/26, C08L 57/00

(54) **RESIN COMPOSITION, MOLDED BODY, AND METHOD FOR PRODUCING RESIN COMPOSITION**

(30) Priority: 20.09.2022 JP 2022149291
(71) Applicant: Mitsui Chemicals, Inc., Tokyo 104-0028 (JP)
(72) Inventor: SAITO, Junji, Chiba 299-0265 (JP); NAGI, Saori, Chiba 299-0265 (JP); WATANABE, Minoru, Chiba 299-0265 (JP); MORI, Akihide, Chiba 299-0265 (JP); FUJIHARA, Kazutoshi, Chiba 299-0265 (JP)
(74) Representative: Hoffmann Eitle
(86) International application number: PCT/JP2023/030843
(87) International publication number: WO 2024/062840

(57) **Abstract**

Provided is a resin composition which makes it possible to obtain a molded article having enhanced bending characteristics (bending strength, bending elastic modulus) and enhanced tensile characteristics (tensile strength, tensile modulus of elasticity). The resin composition includes a thermoplastic resin (A) and natural fibers (B). The average fiber length of the natural fibers (B) as measured by imaging with X-ray computed tomography (X-ray CT) is 32 µm or greater. When a cross section of the composition taken in the transverse direction is imaged by a scanning electron microscope (SEM) and a 1.8 mm × 1.2 mm range is measured, the ratio of the number of the natural fibers (B) to the average size (µm) of the natural fibers (B) (number/average size) in an image of the range captured at a working distance of 6.5 mm and x75 magnifying power is at least 400.

## Description

### Technical Field

The present invention relates to a resin composition, a molded article, and a method for producing a resin composition.

### Background Art

Since resin is lightweight and easy to mold, it is widely used for various applications. In general, resins have lower mechanical strength (such as tensile properties, bending properties, and impact resistance) than metals, so fillers are often added to enhance their mechanical strength.

As the filler, reinforcing fibers such as natural fibers, glass fibers, and carbon fibers are used. Among these, natural fibers such as cellulose have attracted particular attention in recent years because they are inexpensive and have a low environmental impact when disposed of.

For example, Patent Literature (hereinafter, referred to as PTL) 1 describes a cellulose composite material in which wood pulp (cellulose) is dispersed in a polymer matrix. PTL 1 describes that pulp with a relatively high moisture content was mixed with a polymer matrix in a twin-screw extruder to obtain pellets with high pulp dispersion. Further, PTL 1 describes that this pellet can be used for injection molding and the like.

### Citation List

### Patent Literature

PTL 1
Japanese Unexamined Patent Application Publication (Translation of PCT Application) No. 2019-512591

### Summary of Invention

### Technical Problem

As described in PTL 1, it is considered that a molded article having satisfactory mechanical properties such as bending properties (bending strength, bending elastic modulus) and tensile properties (tensile strength, tensile elastic modulus) can be obtained by dispersing natural fibers such as cellulose satisfactorily in a resin. However, according to the study by the present inventors, even when natural fibers are dispersed using the method described in PTL 1, a molded article with sufficiently enhanced bending and tensile properties has not been obtained.

In view of the above circumstances, an object of the present invention is to provide a resin composition in which a natural fiber is dispersed in a resin, a molded article obtained from the resin composition, and a method for producing the resin composition, where a molded article with enhanced bending properties (bending strength, bending elastic modulus) and tensile properties (tensile strength, tensile elastic modulus) can be obtained from the resin composition.

### Solution to Problem

One aspect of the present invention relates to a resin composition according to the following [1] to [12].
[1] A resin composition including:
   a thermoplastic resin (A); and
   a natural fiber (B), in which
   an average fiber length of the natural fiber (B) measured by imaging the resin composition by using X-ray computed tomography (X-ray CT) is 32 µm or more, and
   a ratio (number/average size) of the number of the natural fibers (B) to an average size (µm) of the natural fiber (B) both measured in an image obtained by imaging a range of 1.8 mm × 1.2 mm of a cross section of the resin composition in a TD direction by using a scanning electron microscope (SEM) at a working distance of 6.5 mm and a magnification of 75 times is 400 or more.
[2] The resin composition according to [1], in which
   a ratio (number/area) of the number of the natural fibers (B) to an area (%) occupied by the natural fiber (B) both measured in the image obtained by imaging the range of 1.8 mm × 1.2 mm of the cross section of the resin composition in the TD direction by using the SEM at the working distance of 6.5 mm and the magnification of 75 times is 700 or more.
[3] The resin composition according to [1] or [2], in which
   a ratio ((B)/(A)) of a total mass of the natural fiber (B) to a total mass of the thermoplastic resin (A) is 0.01 or more and 10 or less.
[4] The resin composition according to any one of [1] to [3], in which
   a ratio ((B)/((A) + (B))) of a total mass of the natural fiber (B) to a sum of a mass of the thermoplastic resin (A) and a mass of the natural fiber (B) is 0.50 or more.
[5] The resin composition according to any one of [1] to [4], further including:
   a compatibilizer (C) including a modified polyolefin (C1).
[6] The resin composition according to [5], in which
   the modified polyolefin (C1) is an acid-modified polyolefin resin composition.
[7] The resin composition according to [5] or [6], in which
   a ratio ((C)/((A) + (B) + (C))) of a total mass of the compatibilizer (C) to a sum of a mass of the thermoplastic resin (A), a mass of the natural fiber (B), and a mass of the compatibilizer (C) is 0.008 or more and 0.1 or less.
[8] The resin composition according to any one of [1] to [7], further including:
   a processing aid (D) including a polyolefin wax (D1).
[9] The resin composition according to any one of [1] to [8], in which
   the natural fiber (B) includes a cellulose fiber.
[10] The resin composition according to [9], in which
   a maximum fiber length of the natural fiber (B) measured by imaging the resin composition by using the X-ray computed tomography (X-ray CT) is 900 µm or less.
[11] The resin composition according to any one of [1] to [10], in which
   the thermoplastic resin (A) includes polyolefin.
[12] The resin composition according to any one of [1] to [11], in which
   a ratio ((A)/(W)) of a total mass of the thermoplastic resin (A) to a total mass (W) of the resin composition is 0.5 or less.

Another aspect of the present invention relates to a molded article according to the following [13].

[13] A molded article, in which the molded article is obtained by injection molding the resin composition according to any one of [1] to [12].

Another aspect of the present invention relates to a method for producing a resin composition according to the following [14].

[14] A method for producing the resin composition according to any one of [1] to [12], the method including:
melt-kneading the thermoplastic resin (A) and the natural fiber (B) using a batch-type closed kneading apparatus that includes a casing and a rotor including a stirring blade, in which
the melt-kneading is performed in the presence of water by raising a temperature inside the casing by rotation of the rotor to a temperature at which no modification of the natural fiber (B) occurs.

### Advantageous Effects of Invention

According to the present invention, it is possible to provide a resin composition (in which a natural fiber is dispersed in a resin and from which a molded article with enhanced bending properties (bending strength, bending elastic modulus) and tensile properties (tensile strength, tensile elastic modulus) can be obtained), a molded article obtained from the resin composition, and a method for producing the resin composition.

### Brief Description of Drawings

FIG. 1 is an X-ray CT image of an injection-molded article obtained from resin composition 1 obtained in Examples;
FIG. 2A is an SEM image of a TD cross section of the injection-molded article obtained from resin composition 1 obtained in Examples, and FIG. 2B is a secondary image obtained from FIG. 2A; and
FIG. 3 is an SEM image of resin composition 2 obtained in Examples.

### Description of Embodiments

### 1. Resin Composition

The first embodiment of the present invention relates to a resin composition including a thermoplastic resin (A) and natural fibers (B).

The average fiber length of the natural fibers (B) in the above resin composition, as measured by imaging the resin composition by using X-ray computed tomography (X-ray CT), is 32 µm or more (hereinafter, also referred to as "Condition 1"). Further, the above resin composition has a ratio (number/average size) of the number of the natural fibers (B) to the average size (µm) of the natural fibers (B) of 400 or more. The number of the natural fibers (B) and the average size (µm) of the natural fibers (B) are measured in an image obtained by imaging a range of 1.8 mm × 1.2 mm of a cross section of the resin composition in the TD direction (transverse direction) by using a scanning electron microscope (SEM) at a working distance (distance between an objective lens and the surface of a test piece for measurement) of 6.5 mm and a magnification of 75 times (hereinafter, also referred to as "Condition 2").

Further, it is preferable that the above resin composition has a ratio (number/area) of the number of the natural fibers (B) to an area (%) occupied by the natural fibers (B) of 700 or more. The number of the natural fibers (B) and the area (%) occupied by the natural fibers (B) are measured in an image obtained by imaging a range of 1.8 mm × 1.2 mm of a cross section of the resin composition in the TD direction by using a scanning electron microscope (SEM) at a working distance of 6.5 mm and a magnification of 75 times (hereinafter, also referred to as "Condition 3").

In the resin composition satisfying Condition 1, the natural fibers (B) are dispersed while remaining relatively long. Therefore, the effect of improving the bending properties (bending strength, bending elastic modulus) and the tensile properties (tensile strength, tensile elastic modulus) by the natural fibers (B) is more sufficiently exhibited.

From the above viewpoint, the average fiber length of the natural fibers (B) measured by imaging with X-ray CT is preferably 34 µm or more, more preferably 36 µm or more, and further preferably 38 µm or more. The upper limit value of the average fiber length of the natural fibers (B) is not particularly limited, but may be 100 µm or less, and may be 90 µm or less. Further, from the viewpoint of sufficiently achieving the effect of improving the bending properties and the tensile properties by the natural fibers (B), the above resin composition preferably includes the natural fiber (B) having a fiber length of 150 µm or more when imaged and measured by X-ray CT.

Further, from the viewpoint of sufficiently achieving the effect of improving the bending properties and the tensile properties by the natural fibers (B) and from the viewpoint of making the appearance of the surface of the resin composition better, the maximum fiber length of the natural fibers (B), which is imaged and measured by X-ray computed tomography (X-ray CT), is preferably 900 µm or less, more preferably 800 µm or less, further preferably 600 µm or less, and particularly preferably 500 µm or less. The lower limit value of the maximum fiber length of the natural fibers (B) is not particularly limited, but may be, for example, 100 µm or more, or 150 µm or more. That is, the maximum fiber length of the natural fibers (B) is preferably 100 µm or more and 900 µm or less, more preferably 100 µm or more and 800 µm or less, further preferably 150 µm or more and 600 µm or less, and particularly preferably 150 µm or more and 500 µm or less.

Imaging with X-ray CT for measuring the average fiber length is performed under the following conditions.

An arbitrary portion of the test piece for measurement is cut into 1 mm × 1 mm × 2 mm, and X-ray CT imaging is performed with a field of view of approximately 3 mm × 3 mm. The measurement apparatus uses a high-resolution 3D X-ray microscope nano3DX (manufactured by Rigaku Corporation) and performs CT measurement with low-energy, high-brightness X-rays that provide contrast even for light elements. The detailed measurement conditions are as follows.
X-ray target: Cu
X-ray tube voltage: 40 kV
X-ray tube current: 30 mA
Lens: 0.270 µm/pix
Binning: 1
Rotation angle: 180°
Number of projections: 1000
Exposure time: 60 seconds/sheet
Camera pixel count: 3300 × 2500

In the resin composition that satisfies Condition 2, the average size of the natural fibers (B) is small and the number of the natural fibers (B) is large in a cross section (TD cross section) in a direction perpendicular to the flow direction of the resin composition during production. When the resin composition is produced, the natural fibers (B) are oriented to some extent in the flow direction of the resin composition, and thus, the average size of the natural fibers (B) in the TD cross section is a value that reflects the average diameter of the natural fibers (B) in the resin composition to some extent. Therefore, it can be said that the resin composition satisfying Condition 2 has a high dispersibility, with thin natural fibers (B) being finely and minutely dispersed. Therefore, the resin composition that satisfies Condition 2 is less likely to cause insufficient improvement in mechanical strength due to the dispersion unevenness of the natural fibers (B) in the molded article, and the improvement effects of the bending properties (bending strength, bending elastic modulus) and the tensile properties (tensile strength, tensile elastic modulus) due to the natural fibers (B) are more sufficiently exhibited.

From the above viewpoint, the ratio of the number of the natural fibers (B) to the average size (µm) of the natural fibers (B) in the above SEM image of the TD cross section is preferably 450 or more, more preferably 480 or more, further preferably 600 or more, and particularly preferably 750 or more. The upper limit of the above ratio is not particularly limited, but may be 2000 or less, and may be 1500 or less.

The resin composition that satisfies Condition 3 has a large number of the natural fibers (B) in a cross section (TD cross section) in a direction perpendicular to the flow direction of the resin composition during production, with respect to the area occupied by the natural fibers (B) (that is, the amount (volume) of natural fibers). Therefore, the resin composition that satisfies Condition 3 can be said to have a high dispersibility, with thin natural fibers (B) being finely and minutely dispersed. Therefore, the resin composition that satisfies Condition 3 is less likely to cause insufficient improvement in mechanical strength due to the dispersion unevenness of the natural fibers (B) in the molded article, and the improvement effects of the bending properties (bending strength, bending elastic modulus) and the tensile properties (tensile strength, tensile elastic modulus) due to the natural fibers (B) are more sufficiently exhibited.

From the above viewpoint, the ratio of the number of the natural fibers (B) to the area (%) occupied by the natural fibers (B) in the above SEM image of the TD cross section is preferably 750 or more, more preferably 800 or more, and further preferably 950 or more. The upper limit of the above ratio is not particularly limited, but may be 2000 or less, and may be 1800 or less.

In the SEM image obtained by imaging the above-described TD cross section with an SEM, the natural fibers (B) appears in a granular form. The average size of the natural fibers (B) is the average value of the areas of the respective granular the natural fibers (B). Further, the number of the natural fibers (B) is the number of these granular natural fibers. Further, the area (%) occupied by the natural fibers (B) is a ratio ((Sc/St) × 100) of the area (Sc) occupied by the granular natural fibers (B) with respect to the entire area (St) of the SEM image.

The SEM imaging of the TD cross section is performed under the following conditions.

An arbitrary TD cross section of the test piece for measurement is observed by a high-resolution scanning electron microscope (SEM) in a range of 1.8 mm × 1.2 mm, with a working distance of 6.5 mm, and at a magnification of 75 times. In the enlarged image obtained by observation, the regions filled with the natural fibers (B) are painted black and the other regions are painted white to create a secondary image. The obtained secondary image is read into image analysis software (ImageJ), and the commands: Process, Binary, and Make Binary are executed to perform binarization image processing. The average size of the natural fibers (B) in the area of the observation field (Average Size of black regions), the number of the natural fibers (B) (Count of black regions), and the area% of the natural fibers (B) (Area Fraction of black regions) are calculated using the commands: Analyze and Analyze Particles.

A natural fiber (B) generally has a strong tendency to be hydrophilic, and it is difficult to disperse such a natural fiber (B) in a resin that is basically hydrophobic. In particular, the natural fiber (B) is very difficult to disperse in a resin with low polarity, such as polyolefin or polystyrene. Therefore, in a conventional method such as the method described in PTL 1, very strong kneading is required to sufficiently disperse natural fibers (B). Then, the natural fibers (B) are cut in the length direction by this kneading (condition 1 is not satisfied), and the bending properties and the tensile properties of the molded article are not sufficiently enhanced. On the other hand, when the intensity of the kneading is decreased to prevent the cutting of natural fibers (B), the natural fibers (B) are not sufficiently dispersed, and the bending properties and the tensile properties of the molded article are still less likely to be sufficiently increased.

In contrast, in the present embodiment, by adjusting the dispersion method of the natural fibers (B), the natural fibers (B) are dispersed satisfactorily in the cross-sectional direction while suppressing cutting in the length direction. Thus, a resin composition satisfying Condition 1 and Condition 2, and more preferably Condition 3, is obtained. Hereinafter, first, the materials included in the resin composition and its molded article will be described, and the dispersion method of the natural fibers (B) will be described below.

The above-described features relating to the length and distribution of the natural fibers (B) in the resin composition are also inherited by the molded article (for example, an injection-molded article). Conversely, when the length and distribution of the natural fibers (B) measured in the molded article satisfy the above-described characteristics, it can be presumed that the resin composition used in the production of the molded article also has similar characteristics.

The resin composition and the molded article include a thermoplastic resin (A) and the natural fibers (B). The resin composition may further include a compatibilizer (C), a processing aid (D), and other optional components.

### 1-1. Thermoplastic resin (A)

The type of thermoplastic resin (A) is not particularly limited. For example, thermoplastic resins described in "Jitsuyo̅ Purasuchikku Jiten (Practical Plastic Dictionary)" (edited by Practical Plastic Dictionary Editorial Committee, Sangyo Chosakai Publishing Co., Ltd.) and the like can be widely used. The thermoplastic resin (A) may be contained either alone or in combination of two or more types. The thermoplastic resin (A) may be produced using a raw material derived from biomass.

Examples of the thermoplastic resin (A) include polyolefins, polyamides, polyesters, polyacetals, styrene-based (co)polymers, acrylic resins, polycarbonates, polyphenylene oxides, chlorine resins such as polyvinyl chloride and polyvinylidene chloride, vinyl acetate resins, ethylene-(meth)acrylic acid ester copolymers, ethylene-acrylic acid copolymers, ethylene-methacrylic acid copolymers or ionomers thereof, vinyl alcohol resins, thermoplastic urethane elastomers, and rubber components. Of these, polyolefins are preferred.

Examples of polyolefins include olefin homopolymers such as polyethylene, polypropylene, poly-1-butene, and polymethylbutene, and olefin copolymers such as ethylene-α-olefin random copolymers, propylene-ethylene random copolymers, and ethylene-α-olefin-non-conjugated polyene copolymers. Among these, polyethylene and polypropylene are preferred, and polypropylene is more preferred from the viewpoint of enhancing the heat resistance and rigidity of the molded article. The type of each structural unit constituting various polyolefins and the proportion thereof can be identified by ¹³C-NMR.

The polyolefin may be, for example, an ethylene-based polymer. The ethylene-based polymer is preferably an ethylene homopolymer or a copolymer of ethylene and an α-olefin having 3 to 12 carbon atoms. Specific examples of the ethylene homopolymer include ultra-high molecular weight polyethylene, high-density polyethylene, medium-density polyethylene, low-density polyethylene, and linear low-density polyethylene.

On the other hand, in a case where the ethylene-based polymer is a copolymer of ethylene and an α-olefin having 3 to 12 carbon atoms, the proportion of the structural unit derived from ethylene is preferably 91.0 mol% to 99.9 mol%. On the other hand, the proportion of the structural unit derived from an α-olefin having 3 or more carbon atoms is preferably 0.1 mol% or more and 9.0 mol% or less (the total amount of the structural unit derived from ethylene and the structural unit derived from the α-olefin having 3 or more carbon atoms is 100 mol%).

Examples of the α-olefin having 3 to 12 carbon atoms include linear or branched α-olefins such as propylene, 1-butene, 1-pentene, 3-methyl-1-butene, 1-hexene, 4-methyl-1-pentene, 3-methyl-1-pentene, 1-octene, 1-decene, and 1-dodecene. By using a copolymer of ethylene and an α-olefin having 3 to 12 carbon atoms, the moldability, appearance, and mechanical strength of the molded article are improved. The structural unit derived from these α-olefins may be contained either alone or in combination of two or more types.

Further, the polyolefin may be a propylene homopolymer (polypropylene) or a propylene-based polymer of propylene and ethylene or an α-olefin having 4 to 12 carbon atoms.

In a case where the propylene-based polymer is a copolymer of propylene and ethylene, the proportion of the structural unit derived from propylene can be 60 mol% or more and 99.5 mol% or less (the total amount of the structural unit derived from propylene and the structural unit derived from ethylene is 100 mol%). When a propylene-based polymer with a high proportion of the structural unit derived from propylene is used, the moldability, appearance, and heat resistance of the molded article are improved.

In a case where the propylene-based polymer is a copolymer of propylene and an α-olefin having 4 to 12 carbon atoms, examples of the α-olefin having 4 to 12 carbon atoms include linear or branched α-olefins such as 1-butene, 1-pentene, 3-methyl-1-butene, 1-hexene, 4-methyl-1-pentene, 3-methyl-1-pentene, 1-octene, 1-decene, and 1-dodecene. Of these, 1-butene is preferred. Further, the propylene/α-olefin copolymer in such a case may include an olefin other than an α-olefin having 4 to 12 carbon atoms, and may include a small amount, for example, 10 mol% or less, of a structural unit derived from, for example, ethylene. On the other hand, it is also preferable that the structural unit derived from ethylene is not included from the viewpoint of enhancing the balance between the heat resistance and the mechanical strength of the molded article. The structural units derived from these α-olefins may be contained either alone or in combination of two or more types.

When the above propylene-based polymer is a copolymer of propylene and an α-olefin having 4 to 12 carbon atoms, the proportion of the structural unit derived from propylene is preferably 60 mol% or more and 90 mol% or less. On the other hand, the proportion of the structural unit derived from the α-olefin having 4 to 12 carbon atoms is preferably 10 mol% to 40 mol% (the total amount of the structural unit derived from propylene and the structural unit derived from the α-olefin having 4 to 12 carbon atoms is 100 mol%).

When the composition of the propylene/α-olefin copolymer is within the above range, the appearance, mechanical strength, and heat resistance of the molded article are improved. In particular, the appearance of the molded article is improved because the time during which the resin composition can flow in the mold is increased, probably due to the slow crystallization rate.

The melting point (Tm) obtained by DSC of the above propylene/α-olefin copolymer is usually 60°C or higher and 120°C or lower, and is preferably 65°C or higher and 100°C or lower.

The polyolefin may be an ethylene/α-olefin/non-conjugated polyene copolymer. The above-described copolymer is preferably a copolymer of ethylene, an α-olefin having 3 to 12 carbon atoms, and a non-conjugated polyene, and more preferably a copolymer in which these components are randomly copolymerized. Examples of the α-olefin include α-olefins having 3 to 12 carbon atoms, for example, linear or branched α-olefins having 3 to 12 carbon atoms such as propylene, 1-butene, 1-pentene, 3-methyl-1-butene, 1-hexene, 3-methyl-1-pentene, 1-octene, 1-decene, and 1-dodecene. Examples of the above non-conjugated polyene include cyclic or linear non-conjugated polyenes. Examples of the cyclic non-conjugated polyenes include cyclopentene, cycloheptene, norbornene, 5-ethylidene-2-norbornene, dicyclopentadiene, 5-vinyl-2-norbornene, norbornadiene, methyltetrahydroindene, and tetracyclododecene. Examples of the linear non-conjugated polyenes include 1,4-hexadiene, 7-methyl-1,6-octadiene, 4-ethylidene-8-methyl-1,7-nonadiene, and 4-ethylidene-1,7-undecadiene. Among these, 5-ethylidene-2-norbornene, dicyclopentadiene, and 5-vinyl-2-norbornene are preferred. The structural units derived from these non-conjugated polyenes may be contained either alone or in combination of two or more types.

Examples of the above ethylene/α-olefin/non-conjugated polyene random copolymer include ethylene/propylene/diene terpolymer (EPDM).

Further, a propylene/α-olefin/non-conjugated polyene copolymer, a 1-butene/α-olefin/non-conjugated polyene copolymer, or the like may be used as the polyolefin.

Further, a known ethylene/cyclic olefin copolymer (COC) and a cyclic olefin polymer (COP) may be used as the polyolefin.

### 1-2. Natural fiber (B)

Examples of the natural fibers (B) include wood flour (from wood peeled and processed using a crushing machine), wood fiber, bamboo flour, bamboo fiber, isolated cellulose fiber, wool, agricultural product fiber, wood pulp (pulp made from wood, which is made by removing the bark of a tree trunk, turning the resultant into chips, and subjecting the chips to mechanical, chemical, or combined processing), other natural pulps, rayon, cotton, and the like. Examples of the agricultural product fiber include straw, rice straw, hemp, flax, kenaf, kapok, jute, ramie, sisal, henequen, corn fiber, coir, nut shells, and rice husks. Examples of the above wood pulp include NBKP (needle bleached kraft pulp) and LBKP (leaf bleached kraft pulp). Examples of the other natural pulps include Manila hemp, paper mulberry, mitsumata, and gampi. Among these, wood powder, wood fiber, bamboo, bamboo fiber, cotton, and isolated cellulose fiber are preferred, and isolated cellulose fiber is more preferred from the viewpoint of suppressing variations in the mechanical strength of the molded article and enhancing the predictability of the strength of the obtained molded article.

The origin of the cellulose fiber is not particularly limited, and may be a cellulose fiber obtained from any material such as wood, grass, pulp, and paper. The cellulose fiber obtained from wood may be a cellulose fiber obtained from any wood raw material of coniferous trees and broad-leaved trees. The cellulose fiber obtained from grass may be a cellulose fiber obtained from a non-wood raw material such as a plant of the family Poaceae, Malvaceae, Fabaceae, or Arecaceae. The cellulose fiber obtained from pulp may be a cellulose fiber obtained from any pulp, such as cotton linter pulp obtained from fibers around the seeds of cotton. The cellulose fiber obtained from paper may be a cellulose fiber obtained from any paper, such as newspaper, cardboard, magazine, and high-quality paper. Among these, cellulose fibers obtained from wood or grass are preferable because they are easily obtainable and inexpensive, and cellulose fibers obtained from wood are more preferable.

From the viewpoint of enhancing the mechanical strength and impact resistance of the molded article, the cellulose fiber preferably has an average degree of polymerization of 50 or more and 2000 or less, and more preferably 100 or more and 1500 or less. The average degree of polymerization of the cellulose fiber can be measured in accordance with the reduction specific viscosity method using a copper ethylenediamine solution described in the identification test (3) of "Dai 15 kaisei Nippon Yakkykuhou Kaisetusho (The Japanese Pharmacopoeia, 15th Edition)" (Hirokawa Shoten Publishing).

The cellulose fibers to be used may be either unmodified or undecrystallized, or may be modified or decrystallized. The above-modified cellulose fibers can be obtained by reacting an ether compound, an alkyl chloride, an alkyl acid anhydride, an alkyl acid chloride, or the like with a hydroxyl group of cellulose. The above decrystallized cellulose fibers can be obtained by reducing the crystallinity of cellulose using a known method.

The cellulose fiber has a hydroxyl group and a polar functional group such as a hydroxyl group, a carboxyl group, an amino group, and a quaternary ammonium group introduced by modification.

Examples of commercially available cellulose fibers include KC FLOCK GK series (KC FLOCK is a registered trademark of Nippon Paper Industries Co., Ltd.), which is a powdered cellulose manufactured by Nippon Paper Industries Co., Ltd.

### 1-3. Compatibilizer (C)

A compatibilizer (C) enhances the compatibility between the thermoplastic resin (A) and the natural fiber (B). The compatibilizer can enhance the compatibility between these components, making it easier to finely disperse the natural fibers (B) and improving the processability, heat resistance, mechanical strength, and appearance of the molded article.

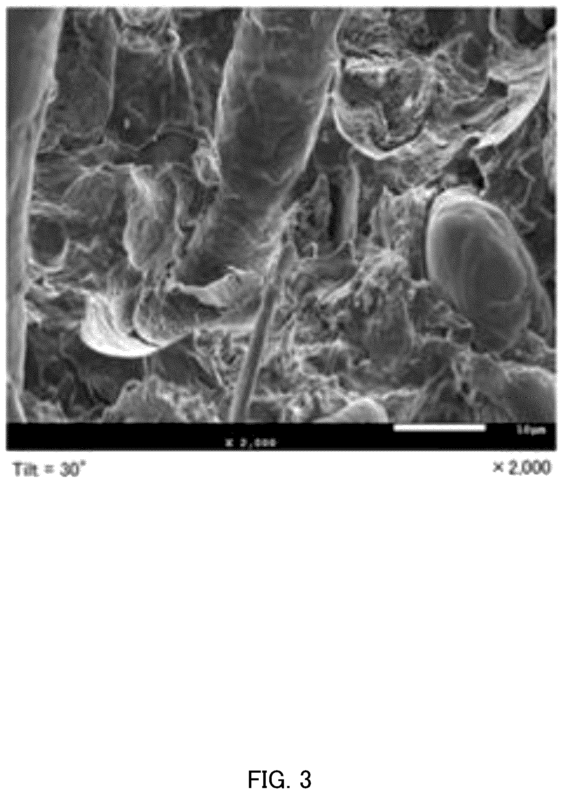

When the blending amount of the natural fibers (B) is large or when the surface area of the natural fibers (B) is large (when the natural fibers (B) are thin), it may be difficult for the thermoplastic resin (A) and the natural fibers (B) to be compatible with each other. Particularly in such a case, the effect of increasing the compatibility of these components and enhancing the microdispersion of the natural fibers (B) by the compatibilizer (C) is remarkable. Further, by adding the compatibilizer (C), the thermoplastic resin (A) adheres closely to the natural fibers (B) as shown in FIG. 3. Therefore, in addition to the mechanical strength, the appearance is considered to be improved.

The compatibilizer (C) includes a modified polyolefin (C1) or a petroleum resin (C2). According to the new findings of the present inventors, it is considered that the compatibilizer (C) having a polar functional group such as an oxygen atom in the molecular chain thereof or a cyclic structure such as styrene has a high affinity for the natural fibers (B) having a cellulose skeleton, which is a cyclic structure containing an oxygen atom, and thus more likely to be localized on the surface of the natural fibers (B). Therefore, it is considered that the effect of enhancing the microdispersion of the natural fibers (B) is remarkably exhibited by using such a compatibilizer (C) having satisfactory compatibility with the thermoplastic resin (A) and high affinity for the natural fibers (B).

### (1) Modified Polyolefin (C1)

A modified polyolefin (C1) may be an unsaturated carboxylic acid-modified product of polyolefin, a styrene-modified polyolefin, an air-oxidized polyolefin, or the like. These modified polyolefins (C1) are obtained by modifying unmodified polyolefins using known methods. The modified polyolefin (C1) may be produced using a raw material derived from biomass.

### (Polyolefin as Raw Material)

The type of polyolefin (unmodified polyolefin) that serves as a raw material for the modified polyolefin is not particularly limited. The unmodified polyolefin man be, for example, a homopolymer or a copolymer of any one of α-olefins such as ethylene, propylene, 1-butene, 1-pentene, 2-methyl-1-butene, 3-methyl-1-butene, 1-hexene, 3-methyl-1-pentene, 4-methyl-1-pentene, 3,3-dimethyl-1-butene, 1-heptene, methyl-1-hexene, dimethyl-1-pentene, trimethyl-1-butene, ethyl-1-pentene, 1-octene, methyl-1-pentene, dimethyl-1-hexene, trimethyl-1-pentene, ethyl-1-hexene, methyl-1-ethylpentene, diethyl-1-butene, propyl-1-pentene, 1-decene, methyl-1-nonene, dimethyl-1-octene, trimethyl-1-heptene, ethyl-1-octene, methylethyl-1-heptene, diethyl-1-hexene, 1-dodecene, and 1-hexadodecene. These α-olefins may be selected according to the compatibility with the thermoplastic resin (A). For example, when the thermoplastic resin (A) is a polyolefin (A-1), it is preferable that the α-olefins are the same type of resin as the polyolefin (A-1) (for example, when the polyolefin (A-1) is polyethylene, the unmodified polyolefin is also polyethylene, and when the polyolefin (A-1) is polypropylene, the unmodified polyolefin is also polypropylene). For example, the unmodified polyolefin is preferably polypropylene, particularly a homopolymer of propylene, a propylene-ethylene random copolymer, or a propylene-1-butene random copolymer.

### (Unsaturated Carboxylic Acid-Modified Product of Unmodified Polyolefin)

The unsaturated carboxylic acid used for the modification of the unmodified polyolefin may be an unsaturated compound (unsaturated carboxylic acid in a narrow sense) having one or more carboxylic acid groups, or may be a derivative of an unsaturated carboxylic acid, such as an ester of an unsaturated carboxylic acid and an alkyl alcohol, or an unsaturated compound having an carboxylic anhydride, such as an anhydride of an unsaturated carboxylic acid. The unsaturated group in the unsaturated carboxylic acid may be a vinyl group, a vinylene group, an unsaturated cyclic hydrocarbon group, or the like. Examples of the unsaturated carboxylic acid in the narrow sense include acrylic acid, methacrylic acid, maleic acid, fumaric acid, tetrahydrophthalic acid, itaconic acid, citraconic acid, crotonic acid, nadic acid, and endo-cis-bicyclo[2,2,1]hept-5-ene-2,3-dicarboxylic acid. Examples of the derivative of an unsaturated carboxylic acid include acid anhydrides such as maleic anhydride and citraconic anhydride, and acid halides, amides, imides, and esters of unsaturated carboxylic acids (in a narrow sense), such as maleinyl chloride, maleinyl imide, monomethyl maleate, and dimethyl maleate. The unsaturated carboxylic acid is preferably maleic acid, nadic acid, or an anhydride thereof, and more preferably maleic anhydride. These unsaturated carboxylic acids may be used alone or in combination of two or more.

When such a unsaturated carboxylic acid is used to modify an unmodified polyolefin, an organic peroxide is used as a radical initiator. Examples of the organic peroxide include di-n-propyl peroxydicarbonate, diisopropyl peroxydicarbonate, di-sec-butyl peroxydicarbonate, t-hexyl peroxyneodecanoate, t-butyl peroxyneodecanoate, t-amyl peroxyneodecanoate, t-butyl peroxyneoheptanoate, t-hexyl peroxypivalate, t-butyl peroxypivalate, t-amyl peroxypivalate, t-hexyl peroxy-2-ethylhexanoate, t-butyl peroxy-2-ethylhexanoate, t-amyl peroxy-2-ethylhexanoate, t-butyl peroxyisobutyrate, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 1,1-di(t-amylperoxy)cyclohexane, 2,2-di(4,4-di(t-butylperoxy)cyclohexyl)propane, t-amyl peroxyisononanoate, t-hexyl peroxyisopropyl monocarbonate, t-amyl peroxynormaloctanoate, t-butyl peroxymaleic acid, t-butyl peroxy-3,5,5-trimethylhexanoate, t-butyl peroxylaurate, t-amyl peroxyisopropyl monocarbonate, t-butyl peroxyisopropyl monocarbonate, t-amyl peroxy-2-ethylhexyl monocarbonate, t-butyl peroxy-2-ethylhexyl monocarbonate, t-hexyl peroxybenzoate, t-butyl peroxyacetate, t-amyl peroxyacetate, 2,2-di(t-butylperoxy)butane, t-butyl peroxyisononanoate, t-amyl peroxybenzoate, t-butyl peroxybenzoate, n-butyl-4,4-di(t-butylperoxy)valerate, methyl ethyl ketone peroxide, di(2-t-butylperoxyisopropyl)benzene, ethyl-3,3-di(t-butylperoxy)butyrate, di-t-hexyl peroxide, 1,3-di(2-t-butylperoxyisopropyl)benzene, 2,5-dimethyl-2,5-di(t-butylperoxy)hexane, t-butyl cumyl peroxide, di-t-amyl peroxide, di-t-butyl peroxide, 2,5-dimethyl-2,5-di-(t-butylperoxy)hexane, t-amyl hydroperoxide, t-butyl hydroperoxide, 1,1-bis(t-butylperoxy)-3,3,5-trimethylcyclohexane, and 1,1-di(t-butylperoxy)-3,3,5-trimethylcyclohexane. Among these, 2,5-dimethyl-2,5-di-(t-butylperoxy)hexane, di-t-butylperoxide, t-butylperoxyisopropylmonocarbonate, and t-butylperoxybenzoate are preferred. These organic peroxy acids may be used alone or in combination of two or more.

The amount of the organic peroxide used at the time of modification may be 0.01 parts by mass or more and 30 parts by mass or less with respect to 100 parts by mass of the unmodified polyolefin, is preferably 1 part by mass or more and 20 parts by mass or less, and is more preferably 2 parts by mass or more and 15 parts by mass or less.

### (Acid-Modified Polyolefin Resin Composition)

In the resin composition and the molded article, the above unsaturated carboxylic acid-modified product is preferably a composition containing an unsaturated carboxylic acid-modified product of a polyolefin and the above unsaturated carboxylic acid (hereinafter, also simply referred to as "acid-modified polyolefin resin composition"). That is, the resin composition and the molded article preferably contain an unsaturated carboxylic acid-modified product of a polyolefin and the above-described unsaturated carboxylic acid. The unsaturated carboxylic acid included in the acid-modified polyolefin resin composition may be the same unsaturated carboxylic acid as that used to modify the unmodified polyolefin, or it may be a different unsaturated carboxylic acid.

From the viewpoint of further enhancing the bending properties and the tensile properties of the obtained molded article, the unsaturated carboxylic acid included in the acid-modified polyolefin resin composition preferably has a nonpolar group, and more preferably has a hydrocarbon group having 1 to 30 carbon atoms as the nonpolar group.

Examples of the above-described hydrocarbon group having 1 to 30 carbon atoms include linear or branched alkyl groups having 1 to 30 carbon atoms, preferably 1 to 20 carbon atoms, such as methyl group, ethyl group, n-propyl group, isopropyl group, n-butyl group, isobutyl group, sec-butyl group, tert-butyl group, neopentyl group, and n-hexyl group; linear or branched alkenyl groups having 2 to 30 carbon atoms, preferably 2 to 20 carbon atoms, such as vinyl group, allyl group, and isopropenyl group; linear or branched alkynyl groups having 2 to 30 carbon atoms, preferably 2 to 20 carbon atoms, such as ethynyl group and propargyl group; cyclic saturated hydrocarbon groups having 3 to 30 carbon atoms, preferably 3 to 20 carbon atoms, such as cyclopropyl group, cyclobutyl group, cyclopentyl group, cyclohexyl group, and adamantyl group; cyclic unsaturated hydrocarbon groups having 5 to 30 carbon atoms, such as cyclopentadienyl group, indenyl group, and fluorenyl group; aryl groups having 6 to 30 carbon atoms, preferably 6 to 20 carbon atoms, such as phenyl group, benzyl group, naphthyl group, biphenyl group, terphenyl group, phenanthryl group, and anthracenyl group; and alkyl-substituted aryl groups having 7 to 20 carbon atoms, such as tolyl group, iso-propylphenyl group, tert-butylphenyl group, dimethylphenyl group, and di-tert-butylphenyl group. Among these, preferred is a group having an aromatic ring, such as an aryl group containing 6 to 30 carbon atoms, preferably 6 to 20 carbon atoms, including a phenyl group, a benzyl group, a naphthyl group, a biphenyl group, a terphenyl group, a phenanthryl group, and an anthracenyl group, and an alkyl-substituted aryl group including a tolyl group, an iso-propylphenyl group, a tert-butylphenyl group, a dimethylphenyl group, and a di-tert-butylphenyl group.

The unsaturated carboxylic acid included in the acid-modified polyolefin resin composition preferably has a molecular weight of 1,000 or less, more preferably 500 or less, and particularly preferably 300 or less. The unsaturated carboxylic acid having a hydrocarbon group with 1 to 30 carbon atoms and a low molecular weight is preferably benzylsuccinic acid and benzylsuccinic anhydride. Derivatives of benzylsuccinic acid may be synthesized by a known method, for example, the method described in Journal of Organic Chemistry, Vol. 21, p. 1473, 1956, or a commercially available product may be purchased and used.

The amount of the unsaturated carboxylic acid included in the acid-modified polyolefin resin composition is preferably 0.005% by mass or more and 10% by mass or less based on the total mass of the acid-modified polyolefin resin composition, more preferably 0.01% by mass or more and 5% by mass or less, and further preferably 0.02% by mass or more and 3% by mass or less.

The acid-modified polyolefin resin composition may be prepared by a method in which a part of the unsaturated carboxylic acid is left unreacted when synthesizing an unsaturated carboxylic acid-modified product of an unmodified polyolefin (hereinafter, this preparation method is referred to as a "one-stage method"), or may be prepared by a method in which an unsaturated carboxylic acid is added after synthesizing the unsaturated carboxylic acid-modified product (hereinafter, this preparation method is referred to as a "two-stage method"). The one-stage method is preferred because it can obtain an acid-modified polyolefin composition through a single-stage process and is cost-effective. Further, according to the one-step method, it is also possible to obtain an acid-modified polyolefin resin composition containing benzyl succinic acid or benzyl succinic anhydride as a by-product by generating these by-products when modifying an unmodified polyolefin with maleic anhydride. On the other hand, when the type of the unsaturated carboxylic acid used in the synthesis of the unsaturated carboxylic acid-modified product of the unmodified polyolefin is different from the type of the unsaturated carboxylic acid included in the acid-modified polyolefin resin composition, or when the control for regulating the homopolymerization of the unsaturated carboxylic acid becomes complicated, the two-stage method is preferred.

When preparing an acid-modified polyolefin resin composition by the two-stage method, an unsaturated carboxylic acid-modified product of an unmodified polyolefin and an unsaturated carboxylic acid are mixed using a Henschel mixer, a Banbury mixer, a V-type blender, a tumbler blender, a ribbon blender, or the like, and then melt-kneaded at 160 to 300°C, preferably 180 to 250°C, using a single-screw extruder, a multi-screw extruder, a roll, a kneader, or the like. During this mixing or melt-kneading, other additives may be added as necessary. After synthesizing an unsaturated carboxylic acid-modified product of an unmodified polyolefin, the resultant may be melt-kneaded in situ with the unmodified polyolefin.

### (Modified Product of Polyolefin Wax)

The modified polyolefin (C1) may be a modified product of a polyolefin wax. The modified product of the polyolefin wax may be an unsaturated carboxylic acid-modified product, a styrene-modified product, a sulfonic acid-modified product, an air-oxidized product, or the like of a polyolefin wax that is a homopolymer or a copolymer of ethylene or an α-olefin having 3 to 12 carbon atoms. The modified products of these polyolefin waxes are obtained by modifying unmodified polyolefin waxes using known methods.

The type of polyolefin wax (unmodified polyolefin wax) serving as a raw material for the modified polyolefin wax is not particularly limited, but is preferably an ethylene homopolymer, a propylene homopolymer, a 4-methyl-1-pentene homopolymer, a copolymer of ethylene and an α-olefin having 3 to 12 carbon atoms, a copolymer of propylene and ethylene or an α-olefin having 4 to 12 carbon atoms, or a copolymer of 4-methyl-1-pentene and another α-olefin. In the above copolymer, the monomer to be copolymerized with ethylene or propylene may be propylene, 1-butene, 1-pentene, 1-hexene, 4-methyl-1-pentene, 1-octene, or the like, and is preferably propylene, 1-butene, 1-hexene, or 4-methyl-1-pentene.

### (Polyethylene Wax as Raw Material)

The unmodified polyolefin wax may be a polyethylene wax that is a homopolymer of ethylene or a copolymer of ethylene and an α-olefin having 3 to 12 carbon atoms.

Examples of the polyethylene wax, which is a homopolymer of ethylene, include high-density polyethylene wax, medium-density polyethylene wax, low-density polyethylene wax, and linear low-density polyethylene wax.

The polyethylene wax, which is a copolymer of ethylene and an α-olefin having 3 to 12 carbon atoms, preferably has a proportion of the structural unit derived from ethylene of 91.0 mol% to 99.9 mol%, more preferably 93.0 mol% to 99.9 mol%, further preferably 95.0 mol% to 99.9 mol%, and particularly preferably 95.0 mol% to 99.0 mol%. On the other hand, the proportion of the structural unit derived from an α-olefin having 3 or more carbon atoms is preferably 0.1 mol% or more and 9.0 mol% or less, more preferably 0.1 mol% or more and 7.0 mol% or less, further preferably 0.1 mol% or more and 5.0 mol% or less, and particularly preferably 1.0 mol% or more and 5.0 mol% or less (the total amount of the structural unit derived from ethylene and the structural unit derived from the α-olefin having 3 or more carbon atoms is 100 mol%).

Examples of the α-olefin having 3 to 12 carbon atoms include linear or branched α-olefins such as propylene, 1-butene, 1-pentene, 3-methyl-1-butene, 1-hexene, 4-methyl-1-pentene, 3-methyl-1-pentene, 1-octene, 1-decene, and 1-dodecene. Of these, propylene, 1-butene, 1-hexene, 4-methyl-1-pentene, and 1-octene are preferred, α-olefins having 3 to 8 carbon atoms are more preferred, propylene and 1-butene are further preferred, and 1-butene is particularly preferred. When ethylene is copolymerized with propylene or 1-butene, the melting point may be effectively lowered even with a small amount of propylene or 1-butene, and the crystallinity of the polyolefin wax is increased, resulting in the compatibilizer (C) becoming hard and less sticky. Therefore, when such a compatibilizer (C) is used, stickiness is less likely to occur on the surface of the molded article. The structural units derived from these α-olefins may be contained either alone or in combination of two or more types.

In particular, when the thermoplastic resin (A) is polyethylene, the compatibility between the thermoplastic resin (A) and the compatibilizer (C) can be enhanced by using a modified product of polyethylene wax as the compatibilizer (C), thereby improving the processability, heat resistance, mechanical strength, and appearance of the molded article.

### (Polypropylene Wax as Raw Material)

The unmodified polyolefin wax may be a polypropylene wax that is a homopolymer of propylene or a copolymer of propylene and ethylene or an α-olefin having 4 to 12 carbon atoms.

These polypropylene waxes may be obtained by homopolymerizing propylene or by copolymerizing propylene with another α-olefin in the presence of a stereospecific catalyst, or may be obtained by thermally decomposing high molecular weight polypropylene. Alternatively, the polypropylene wax may be obtained by solvent fractionation of polypropylene based on the difference in solubility in a solvent, or by molecular distillation to separate polypropylene based on the difference in boiling point.

In a case where the polypropylene wax is a copolymer of propylene and ethylene, the proportion of the structural unit derived from propylene may be 60 mol% or more and 99.5 mol% or less, is preferably 80 mol% or more and 99 mol% or less, is more preferably 90 mol% or more and 98.5 mol% or less, and is particularly preferably 95 mol% or more and 98 mol% or less (the total amount of the structural unit derived from propylene and the structural unit derived from ethylene is 100 mol%). When a propylene-based polymer with a high proportion of the structural unit derived from propylene is used, the moldability, appearance, and heat resistance of the molded article are improved.

In a case where the polypropylene wax is a copolymer of propylene and an α-olefin having 4 to 12 carbon atoms, examples of the α-olefin having 4 to 12 carbon atoms include linear or branched α-olefins such as 1-butene, 1-pentene, 3-methyl-1-butene, 1-hexene, 4-methyl-1-pentene, 3-methyl-1-pentene, 1-octene, 1-decene, and 1-dodecene. Of these, 1-butene is preferred. The structural unit derived from the α-olefin may be contained either alone or in combination of two or more types.

In a case where the above propylene-based polymer is a copolymer of propylene and an α-olefin having 4 to 12 carbon atoms, the proportion of the structural unit derived from propylene is preferably 60 mol% or more and 90 mol% or less, more preferably 65 mol% or more and 88 mol% or less, further preferably 70 mol% or more and 85 mol% or less, and particularly preferably 75 mol% or more and 82 mol% or less. On the other hand, the proportion of the structural unit derived from the α-olefin having 4 to 12 carbon atoms is preferably 10 mol% to 40 mol%, more preferably 12 mol% to 35 mol%, further preferably 15 mol% to 30 mol%, and particularly preferably 18 mol% to 25 mol% (the total amount of the structural unit derived from propylene and the structural unit derived from the α-olefin having 4 to 12 carbon atoms is 100 mol%).

When the composition of the propylene/α-olefin copolymer is within the above range, the appearance, mechanical strength, and heat resistance of the molded article are improved. In particular, the appearance of the molded article is improved because the time during which the resin composition can flow in the mold is increased, probably due to the slow crystallization rate. Further, when the composition of the above propylene/α-olefin copolymer is within the above range, the heat resistance and mechanical strength of a injection body are also enhanced.

In particular, when the thermoplastic resin (A) is polypropylene, the use of a modified product of polypropylene wax as the compatibilizer (C) can enhance the compatibility between the thermoplastic resin (A) and the compatibilizer (C), thereby improving the processability, heat resistance, mechanical strength, and appearance of the molded article.

### (Poly-4-methyl-1-pentene Wax as Raw Material)

The unmodified polyolefin wax may be a poly-4-methyl-1-pentene wax, which is a homopolymer of 4-methyl-1-pentene or a copolymer of 4-methyl-1-pentene and another α-olefin.

The poly-4-methyl-1-pentene wax can be obtained by thermally decomposing a 4-methyl-1-pentene-based polymer as described in WO2011/055803, or a 4-methyl-1-pentene-based polymer (B-1) or a 4-methyl-1-pentene-based polymer (B-2) as described in Japanese Patent Application Laid-Open No. 2005-028187 may be used as the poly-4-methyl-1-pentene wax.

### (Production Method of Polyolefin Wax as Raw Material)

These unmodified polyolefin waxes may be synthesized by polymerizing raw materials or may be produced by thermally decomposing a high molecular weight (co)polymer. The thermal decomposition can be performed under conditions of 300 to 450°C for 5 minutes to 10 hours. The unmodified polyolefin wax produced by the thermal decomposition under the above conditions has an unsaturated terminal. Then, when the number of vinylidene groups per 1,000 carbon atoms measured by ¹H-NMR is 0.5 or more and 5 or less, the compatibilizer (C) is more likely to be compatible with the natural fibers (B), and thus preferable. Alternatively, these unmodified polyolefin waxes may be obtained by solvent fractionation from a high molecular weight (co)polymer based on a difference in solubility in a solvent, or by molecular distillation and fractionation based on a difference in boiling point.

The synthesis of an unmodified polyolefin wax by polymerization of a raw material can be carried out by a known method such as a method of polymerizing with a Ziegler/Natta catalyst or a metallocene-based catalyst.

For example, the following can be used: a suspension polymerization method in which a monomer serving as a raw material or a polymer thereof is suspended as particles in an inert hydrocarbon medium such as hexane and is polymerized, a vapor phase polymerization method in which the monomer or the polymer thereof is polymerized without using a solvent, or a solution polymerization method in which the monomer or the polymer thereof is polymerized while being melted in an inert hydrocarbon medium. Among these, the solution polymerization method is preferred because it is inexpensive and achieves satisfactory quality. The polymerization may be carried out by a batch method or a continuous method. Further, the polymerization may be performed in two or more stages with different reaction conditions.

Examples of the inert hydrocarbon medium used in suspension polymerization method or solution polymerization method include aliphatic hydrocarbons such as propane, butane, pentane, hexane, heptane, octane, decane, dodecane, and kerosene, alicyclic hydrocarbons such as cyclopentane, cyclohexane, and methylcyclopentane, aromatic hydrocarbons such as benzene, toluene, and xylene, and halogenated hydrocarbons such as ethylene chloride, chlorobenzene, and dichloromethane. These inert hydrocarbon media may be used alone or in combination of two or more. Further, a so-called bulk polymerization method in which α-olefin itself is used as a solvent can also be used.

The catalyst is preferably a metallocene-based catalyst. An example of the metallocene-based catalyst is a catalyst including the following (see Japanese Patent Application Laid-Open No. 08-239414 and WO2007/114102):
(a) a metallocene compound of a transition metal selected from Group 4 of the periodic table; and
(b) an organoaluminum oxy compound (b-1), a compound (b-2) that reacts with the metallocene compound (a) to form an ion pair (hereinafter, simply referred to as an "ionized ionic compound"), or an organoaluminum compound (B-3).

Examples of the metallocene compound (a) of a transition metal selected from Group 4 of the periodic table include the metallocene compounds described in Japanese Patent Application Laid-Open No. H08-239414 and WO2007/114102. Of these, bis(n-butylcyclopentadienyl)zirconium dichloride and bis(n-butylcyclopentadienyl)zirconium dimethyl are preferred.

As the organoaluminum oxy compound (b-1), a known aluminoxane, for example, an organoaluminum oxy compound described in Japanese Patent Application Laid-Open No. H08-239414 and WO2007/114102 can be used. Of these, methylaluminoxane and modified methylaluminoxane (MMAO) prepared using trimethylaluminum and triisobutylaluminum are preferred because they are readily available as commercial products.

Examples of the ionized ionic compound (b-2) include ionized ionic compounds described in Japanese Patent Application Laid-Open No. H08-239414 and WO2007/114102. Among these, triphenylcarbenium tetrakis(pentafluorophenyl)borate and N,N-dimethylanilinium tetrakis(pentafluorophenyl)borate are preferred because they are easily available as commercial products and tend to enhance the polymerization activity.

Examples of the organoaluminum compound (b-3) include organoaluminum compounds described in WO2007/114102. Among these, trimethylaluminum, triethylaluminum, and triisobutylaluminum are preferred because they are readily available as commercial products, and triisobutylaluminum is more preferred because it is easy to handle.

In a case of combining the compounds of (b-1) to (b-3), the combination of triisobutylaluminum and triphenylcarbenium tetrakis(pentafluorophenyl)borate, and the combination of triisobutylaluminum and N,N-dimethylanilinium tetrakis(pentafluorophenyl)borate are preferred because they can significantly enhance the polymerization activity.

When the polymerization of a monomer is performed using the above-described metallocene catalyst, the content of each component may be set as follows.
(1) The content of the metallocene compound (a) is 10⁻⁹ moles to 10⁻¹ moles, preferably 10⁻⁸ moles to 10⁻² moles, per liter of reaction volume.
(2) The content of the organoaluminum oxy compound (b-1) is such that the molar ratio [Al/M] of the aluminum atom (Al) in compound (b-1) to the total transition metal atoms (M) in the metallocene compound (a) is 0.01 or more and 5000 or less, preferably 0.05 or more and 2000 or less.
(3) The content of the ion compound (b-2) is such that the molar ratio [(b-2)/M] of the compound (b-2) to the total transition metal atoms (M) in the metallocene compound (a) is 1 or more and 10 or less, preferably 1 or more and 5 or less.
(4) The content of the organoaluminum compound (b-3) is such that the molar ratio [(b-3)/M] of the compound (b-3) to the total transition metal atoms (M) in the metallocene compound (a) is 0.01 or more and 50000 or less, preferably 0.05 or more and 10000 or less.

The temperature during the polymerization may be 10°C or higher and 200°C or lower, is preferably 60°C or higher and 180°C or lower, and is more preferably 75°C or higher and 170°C or lower. The polymerization pressure may be normal pressure or more and 7.8 MPa-G (G is gauge pressure) or less and is preferably normal pressure or more and 4.9 MPa-G or less.

During the polymerization, the monomer (ethylene or α-olefin) as a raw material is supplied to the polymerization system in an amount such that the above-described composition of the unmodified polyolefin wax is obtained. Further, a molecular weight modifier such as hydrogen may be added during the polymerization.

In this manner, the polymerization liquid obtained by polymerizing the raw material can be processed by a conventional method to obtain an unmodified polyolefin wax.

Further, the polymer obtained by the above method may be further purified. The purification can be performed by a method of degassing under vacuum at a temperature equal to or higher than the melting point, a method of dissolving the polymer in a solvent such as toluene, xylene, hexane, or heptane, then adding a polar solvent such as methanol or acetone, and filtering to remove the low molecular weight portion, or a method of dissolving the entire amount of the polymer in a solvent, precipitating at a specific temperature, and removing the high molecular weight portion or the low molecular weight portion.

The number average molecular weight (Mn) and the intrinsic viscosity [η] of the unmodified polyolefin wax tend to decrease when the polymerization temperature is increased or the hydrogen concentration is increased during polymerization, and thus can be controlled within the above range. Alternatively, the number average molecular weight (Mn) and the intrinsic viscosity [η] can be adjusted by the amount of an organoaluminum oxy compound or an ionized ionic compound used as a co-catalyst. Further, the number average molecular weight (Mn) and the intrinsic viscosity [η] can be adjusted by purification after polymerization.

The content of each of the structural units derived from ethylene and α-olefins can be controlled by adjusting the blending amount during polymerization, as well as by the catalyst species or the polymerization temperature.

The Mw/Mn of the unmodified polyolefin wax can be controlled by the catalyst species, the polymerization temperature, and the like. In general, a Ziegler-Natta catalyst or a metallocene catalyst is used for polymerization, but it is preferable to use a metallocene catalyst to achieve the desired Mw/Mn range. Further, the Mw/Mn can also be adjusted to the preferred range by purification using a method such as solvent fractionation, which separates the polymer based on a difference in solubility in a solvent, or distillation.

The softening point of the unmodified polyolefin wax can be adjusted by the composition of ethylene and α-olefin, and for example, in a case of a copolymer of ethylene and α-olefin, the softening point tends to decrease by increasing the content of the α-olefin. Further, the softening point can be controlled by the catalyst species, the polymerization temperature, and the like. Further, the softening point can be adjusted by purification after polymerization.

The density of the unmodified polyolefin wax can be adjusted by the composition of ethylene or α-olefin and the polymerization temperature or the hydrogen concentration during polymerization.

### (Modified Polyolefin Wax as Graft-modified Product of Unmodified Polyolefin Wax)

The graft-modified product of an unmodified polyolefin wax is obtained by graft-modifying the unmodified polyolefin wax with an unsaturated carboxylic acid, a styrene, a sulfonate, or a mixture thereof. The graft modification may be performed by a known method. For example, a graft-modified product of an unmodified polyolefin wax can be obtained by a method of melt-kneading the unmodified polyolefin wax and an unsaturated carboxylic acid, a styrene, or a sulfonate in the presence of a polymerization initiator such as an organic peroxide, or by a method of kneading a solution, in which the unmodified polyolefin wax and an unsaturated carboxylic acid, a styrene, or a sulfonate are dissolved in an organic solvent, in the presence of a polymerization initiator such as an organic peroxide.

The melt-kneading can be performed using an autoclave, a Henschel mixer, a V-type blender, a tumbler blender, a ribbon blender, a single-screw extruder, a multi-screw extruder, a kneader, a Banbury mixer, or the like. Of these, from the viewpoint of dispersing the components more uniformly and causing the components to react efficiently, it is preferable to use an apparatus such as an autoclave capable of batch-type melt kneading, which allows easy adjustment of the residence time and ensures a long residence time.

Examples of the unsaturated carboxylic acid used for the graft modification include acrylic acid esters such as methyl acrylate, ethyl acrylate, butyl acrylate, sec-butyl acrylate, isobutyl acrylate, propyl acrylate, isopropyl acrylate, 2-octyl acrylate, dodecyl acrylate, stearyl acrylate, hexyl acrylate, isohexyl acrylate, phenyl acrylate, 2-chlorophenyl acrylate, diethylaminoethyl acrylate, 3-methoxybutyl acrylate, diethylene glycol ethoxylate acrylate, and 2,2,2-trifluoroethyl acrylate; methacrylic acid esters such as methyl methacrylate, ethyl methacrylate, butyl methacrylate, sec-butyl methacrylate, isobutyl methacrylate, propyl methacrylate, isopropyl methacrylate, 2-octyl methacrylate, dodecyl methacrylate, stearyl methacrylate, hexyl methacrylate, decyl methacrylate, phenyl methacrylate, 2-chlorohexyl methacrylate, diethylaminoethyl methacrylate, 2-hexylethyl methacrylate, and 2,2,2-trifluoroethyl methacrylate; maleic acid esters such as ethyl maleate, propyl maleate, butyl maleate, diethyl maleate, dipropyl maleate, and dibutyl maleate; fumaric acid esters such as ethyl fumarate, butyl fumarate, and dibutyl fumarate; unsaturated dicarboxylic acids such as maleic acid, fumaric acid, itaconic acid, crotonic acid, nadic acid, and methylhexahydrophthalic acid; and anhydrides of unsaturated carboxylic acids such as maleic anhydride, itaconic anhydride, citraconic anhydride, allylsuccinic anhydride, glutaconic anhydride, and nadic anhydride. Among these, maleic anhydride is preferred because it has a relatively high reactivity with unmodified polyolefin wax, undergoes little structural change due to polymerization or the like, and tends to be stable as a basic structure. Further, due to the above-described properties of maleic anhydride, the maleic anhydride-modified polyolefin wax maintains a stable state even in a high-temperature environment during molding, and the degree of action on the surface of the natural fibers (B) is less likely to decrease. As a result, it is considered that a molded article excellent in appearance, heat resistance, processability, and mechanical strength can be obtained.

The acid value (JIS K 2501 (2003)) of the modified polyolefin wax graft-modified with an unsaturated carboxylic acid is preferably 1 mgKOH/g or more and 100 mgKOH/g or less, more preferably 20 mgKOH/g or more and 90 mgKOH/g or less, and further preferably 30 mgKOH/g or more and 87 mgKOH/g or less.

When the acid value of the modified polyolefin wax graft-modified with an unsaturated carboxylic acid is within the above-described range, the appearance, processability, heat resistance, and mechanical strength of the molded article are enhanced. This is considered to be because the affinity of the compatibilizer (C) for the natural fibers (B) is sufficiently increased, while the compatibility of the compatibilizer (C) with the thermoplastic resin (A) is also sufficiently maintained, resulting in a sufficiently high compatibility between the thermoplastic resin (A) and the natural fibers (B), an increase in the uniformity of the entire system, and an improvement in the dispersibility of the natural fibers (B). In particular, even when the graft-modified polyolefin wax with an unsaturated carboxylic acid is of low molecular weight, the above effect is sufficiently exhibited.

In particular, when the processability and appearance of the molded article are important, the acid value of the modified polyolefin wax graft-modified with an unsaturated carboxylic acid is preferably 1 mgKOH/g or more and 55 mgKOH/g or less. The acid value is more preferably 20 mgKOH/g or more, further preferably 30 mgKOH/g or more, and particularly preferably 42 mgKOH/g or more. Further, the acid value is more preferably 50 mgKOH/g or less, even more preferably 48 mgKOH/g or less, and particularly preferably 46 mgKOH/g or less.

On the other hand, when the heat resistance and mechanical strength of the molded article are important, the acid value of the modified polyolefin wax graft-modified with an unsaturated carboxylic acid is preferably 40 mgKOH/g or more and 100 mgKOH/g or less, more preferably 50 mgKOH/g or more and 100 mgKOH/g or less, further preferably 60 mgKOH/g or more and 100 mgKOH/g or less, further preferably 60 mgKOH/g or more and 95 mgKOH/g or less, further preferably 60 mgKOH/g or more and 90 mgKOH/g or less, and particularly preferably 80 mgKOH/g or more and 90 mgKOH/g or less.

Examples of styrenes used for graft modification include styrene, α-methylstyrene, o-methylstyrene, p-methylstyrene, m-methylstyrene, p-chlorostyrene, m-chlorostyrene, and p-chloromethylstyrene.

The content of a styrene in the modified polyolefin wax graft-modified with the styrene is preferably 1 part by mass or more and 500 parts by mass or less, more preferably 5 parts by mass or more and 200 parts by mass or less, further preferably 20 parts by mass or more and 160 parts by mass or less, and particularly preferably 22 parts by mass or more and 30 parts by mass or less, with respect to 100 parts by mass of the modified polyolefin wax. When the content of a styrene is within the above-described range, the compatibility between the modified polyolefin wax and the natural fibers (B) is improved, and excessive interaction that causes an increase in viscosity is suppressed, thereby enhancing the processability, appearance, heat resistance, and mechanical strength of the molded article.

When the graft-modified product of the unmodified polyolefin wax is graft-modified with both an unsaturated carboxylic acid and a styrene, the grafting amount ratio of the unsaturated carboxylic acid and the styrene, "(unsaturated carboxylic acid)/(styrene)," is preferably 0.01 or more and 1 or less, more preferably 0.03 or more and 0.8 or less, and further preferably 0.05 or more and 0.6 or less. By setting the grafting amount ratio to 0.01 or more, it is possible to cause the unsaturated carboxylic acid to sufficiently interact with the surface of the natural fibers (B) and to sufficiently enhance the impact resistance of the molded article. By setting the grafting amount ratio to 1 or less, it is possible to appropriately suppress the melt viscosity of the graft-modified product of the unmodified polyolefin wax, thereby facilitating the production.

The content of a styrene in the modified polyolefin wax graft-modified with a sulfonate salt styrene is preferably 0.1 mmol or more and 100 mmol or less per 1 g of the modified polyolefin wax, and more preferably 5 mmol or more and 50 mmol or less. When the amount of modification with a sulfonate is within the above range, the dispersibility of the natural fibers (B) is improved, and the mechanical strength of the molded article is more likely to be enhanced.

The graft-modified polyolefin wax may be a commercially available product. Examples of the commercially available product include Diacarna PA30 manufactured by Mitsubishi Chemical Corporation (Diacarna is a registered trademark of Mitsubishi Chemical Corporation), 2203A of High wax acid treatment type manufactured by Mitsui Chemicals, Inc., and oxidized paraffin manufactured by Nippon Seiro Co., Ltd.

### (Modified Polyolefin Wax as Air-Oxidized Product of Unmodified Polyolefin Wax)

The air-oxidized product of the unmodified polyolefin wax is obtained by bringing unmodified polyolefin wax as a raw material into contact with oxygen or an oxygen-containing gas while stirring the component in a molten state. The unmodified polyolefin wax as the raw material may be in a molten state at a temperature of 130°C or higher and 200°C or lower, preferably 140°C or higher to 170°C or lower.

The above oxygen or oxygen-containing gas may be pure oxygen (oxygen obtained by ordinary liquid air fractional distillation or electrolysis of water, which may contain other components at impurity levels) or a mixed gas of pure oxygen and another gas (for example, air or ozone).

The contact between the unmodified polyolefin wax and oxygen or an oxygen-containing gas is preferably performed by continuously supplying the oxygen-containing gas from the lower part of a reactor that accommodates the molten unmodified polyolefin wax, thereby bringing the unmodified polyolefin wax into contact with the oxygen-containing gas. At this time, it is preferable to supply the oxygen-containing gas such that 1.0 NL or more and 8.0 NL or less of oxygen is supplied per minute for 1 kg of unmodified polyolefin wax.

The acid value (JIS K 5902 (2006)) of the air-oxidized product of polyolefin wax obtained in this manner is preferably 1 mgKOH/g or more and 100 mgKOH/g or less, more preferably 20 mgKOH/g or more and 90 mgKOH/g or less, and further preferably 30 mgKOH/g or more and 87 mgKOH/g or less.

When the acid value of the air-oxidized product of the polyolefin wax is within the above range, the appearance, processability, heat resistance, and mechanical strength of the molded article are enhanced. This is considered to be because the affinity of the compatibilizer (C) for the natural fibers (B) is sufficiently increased, while the compatibility of the compatibilizer (C) with the thermoplastic resin (A) is also sufficiently maintained, resulting in a sufficiently high compatibility between the thermoplastic resin (A) and the natural fibers (B), an increase in the uniformity of the entire system, and an improvement in the dispersibility of the natural fibers (B). In particular, even when the air-oxidized product of the polyolefin wax has a low molecular weight, the above effect is sufficiently exhibited.

In particular, when the processability and appearance of the molded article are important, the acid value of the air-oxidized product of the polyolefin wax is preferably 1 mgKOH/g or more and 55 mgKOH/g or less. The acid value is more preferably 20 mgKOH/g or more, further preferably 30 mgKOH/g or more, and particularly preferably 42 mgKOH/g or more. Further, the acid value is more preferably 50 mgKOH/g or less, even more preferably 48 mgKOH/g or less, and particularly preferably 46 mgKOH/g or less.

On the other hand, when the heat resistance and mechanical strength of the molded article are important, the acid value of the air-oxidized product of the polyolefin wax is preferably 40 mgKOH/g or more and 100 mgKOH/g or less, more preferably 50 mgKOH/g or more and 100 mgKOH/g or less, further preferably 60 mgKOH/g or more and 100 mgKOH/g or less, further preferably 60 mgKOH/g or more and 95 mgKOH/g or less, further preferably 60 mgKOH/g or more and 90 mgKOH/g or less, and particularly preferably 80 mgKOH/g or more and 90 mgKOH/g or less.

### (Physical Properties of Modified Polyolefin Wax)

The modified polyolefin wax preferably satisfies one or more of the following requirements (i) to (iv), and more preferably satisfies all of the following requirements (i) to (iv).
(i) The number average molecular weight (Mn) in terms of polystyrene measured by gel permeation chromatography (GPC) is 300 or more and 20,000 or less. The number average molecular weight (Mn) is preferably 500 or more and 18,000 or less, more preferably 1,000 or more and 12,000 or less, further preferably 1,500 or more and 12,000 or less, further preferably 3,700 or more and 12,000 or less, further preferably 6,000 or more and 12,000 or less, and particularly preferably 8,000 or more and 10,000 or less. When the number average molecular weight (Mn) is within the above range, the dispersibility of the natural fibers (B) in the resin composition can be further improved, and the appearance, heat resistance, and mechanical strength of the molded article can be further enhanced. Further, the processability and kneadability of the resin composition are also improved.
(ii) The softening point measured in accordance with JIS K 2207 (2006) is 70°C or higher and 170°C or lower. The softening point is preferably 160°C or lower, more preferably 150°C or lower, and still more preferably 145°C or lower. The above softening point is preferably 80°C or higher, more preferably 90°C or higher, further preferably 95°C or higher, and particularly preferably 105°C or higher. When the softening point is within the above range, the appearance, processability, heat resistance, and mechanical strength of the molded article are further enhanced.
(iii) The density measured by a density gradient tube method is 830 kg/m³ or more and 1200 kg/m³ or less. The density is preferably 860 kg/m³ or more and 1100 kg/m³ or less, more preferably 890 kg/m³ or more and 1000 kg/m³ or less, further preferably 895 kg/m³ or more and 960 kg/m³ or less, and particularly preferably 895 kg/m³ or more and 935 kg/m³ or less. When the density is within the above range, the dispersibility of the natural fibers (B) in the resin composition can be further improved, and the appearance, heat resistance, and mechanical strength of the molded article can be further enhanced. Further, the processability and kneadability of the resin composition are also improved. Although the reason is not clear, the density of natural fibers (B) is generally 1,000 kg/m³ or more. For such natural fibers (B), it is considered that when the compatibilizer (C) with a lower density is used, the the compatibilizer (C) localizes on the surface of the natural fibers (B), reducing the surface tension of the surface of the natural fibers (B) and decreasing the aggregated force of the natural fibers (B).

The difference between the density of the thermoplastic resin (A) and the density of the compatibilizer (C) is preferably less than 50 kg/m³, more preferably less than 30 kg/m³, and still more preferably less than 15 kg/m³. When the density difference is within the above-described range, the appearance, processability, heat resistance, and mechanical strength of the molded article are further enhanced. The reason for this is not clear, but it is considered that substances with similar densities tend to mix with each other easily. That is, it is considered that the compatibility between the thermoplastic resin (A) and the compatibilizer (C) is increased, and the dispersibility of the natural fibers (B) coated with the compatibilizer (C) in the thermoplastic resin (A) is increased. Further, when the density difference is within the above range, the bleed-out of the compatibilizer (C) from the thermoplastic resin (A) is suppressed, which is considered to further enhance the appearance, heat resistance, and mechanical strength of the molded article.

(iv) The ratio (Mw/Mn) of the weight average molecular weight to the number average molecular weight measured by gel permeation chromatography (GPC) is 7.0 or less. The Mw/Mn is preferably 5.0 or less, and more preferably 3.0 or less. When the Mw/Mn is included in the above range, the molded article has a further improved appearance, heat resistance, and mechanical strength because the amount of low molecular weight components that cause a decrease in physical properties is small.

When any two or more types of modified polyolefin waxes are used in combination as the compatibilizer (C), the processability of the resin composition and the mechanical strength of the molded article tend to increase when the melting points or softening points of the modified polyolefin waxes used in combination are different from each other.

In a case where two or more types of modified polyolefin waxes are used in combination, the difference between the softening point of a modified polyolefin wax (CWH) having the highest softening point and the softening point of a modified polyolefin wax (CWL) having the lowest softening point is preferably 5°C or higher, more preferably 10°C or higher, further preferably 20°C or higher, still further preferably 30°C or higher, and particularly preferably 40°C or higher.

When the difference between the softening point of the modified polyolefin wax (CWH) and the softening point of the modified polyolefin wax (CWL) is within the above range, the processability and mechanical strength of the molded article are enhanced. Further, it is possible to reduce the torque and to suppress shear heat generation when using an extruder. Although the reason is not clear, it is considered that the dispersibility of the natural fibers (B) in the thermoplastic resin (A) is increased or the torque of the extruder is effectively reduced as the modified polyethylene wax (CWL) having a lower softening point melts at an earlier timing in the system. Further, it is considered that the molten modified polyethylene wax (CWL) suppresses shear heat generation in the system and prevents the the natural fibers (B) from being scorched. On the other hand, after the dispersibility of the natural fibers (B) is increased, the contact efficiency between modified polyolefin wax (CWH) and the natural fibers (B) is increased as the modified polyolefin wax (CWH) having a higher softening point melts, and the modification effect on the natural fibers (B) by the modified polyolefin wax (CWH) is increased. By these actions, it is considered possible to enhance the processability of the resin composition while also effectively improving the mechanical properties.

The softening point of the modified polyolefin wax (CWH) having the highest softening point is preferably 100°C or higher and 180°C or lower, and more preferably 110°C or higher and 175°C or lower. Further, the softening point of the modified polyolefin wax (CWL) having the lowest softening point is preferably 80°C or higher and 150°C or lower, and more preferably 90°C or higher and 145°C or lower.

Further, the melting point of the modified polyolefin wax (CWH) having the highest softening point is preferably 90°C or higher and 170°C or lower, and more preferably 100°C or higher and 165°C or lower. Further, the melting point of the modified polyolefin wax (CWL) having the lowest softening point is preferably 70°C or higher and 140°C or lower, and more preferably 80°C or higher and 135°C or lower.

At this time, the larger the amount of the modified polyolefin wax (CWL) with the lowest softening point, the more likely the dispersibility of the natural fibers (B) is to increase. Specifically, the mass ratio (CWH)/(CWL) of the modified polyolefin wax (CWH) to the modified polyolefin wax (CWL) is preferably 1/200 or more and 1/1 or less, more preferably 1/50 or more and 1/1.1 or less, further preferably 1/20 or more and 1/1.3 or less, and particularly preferably 1/10 or more and 1/1.5 or less.

The modified polyolefin wax (CWH) having the highest softening point is preferably a modified polyolefin wax graft-modified with an unsaturated carboxylic acid.

Further, the acid value of the modified polyolefin wax (CWH) having the highest softening point is preferably 40 mgKOH/g or more and 100 mgKOH/g or less, more preferably 50 mgKOH/g or more and 100 mgKOH/g or less, still more preferably 60 mgKOH/g or more and 100 mgKOH/g or less, still more preferably 60 mgKOH/g or more and 95 mgKOH/g or less, still more preferably 60 mgKOH/g or more and 90 mgKOH/g or less, and particularly preferably 80 mgKOH/g or more and 90 mgKOH/g or less. When the acid value of the modified polyolefin wax (CWH) having the highest softening point is within the above range, the heat resistance and mechanical strength of the molded article are further enhanced.

The acid value of the modified polyolefin wax (CWL) having the lowest softening point is preferably 90 mg KOH/g or less, and more preferably 65 mg KOH/g or less. The lower limit of the acid value of the modified polyolefin wax (CWL) having the lowest softening point is not particularly limited, but is preferably 15 mgKOH/g or more. When the acid value of the modified polyolefin wax (CWL) with the lowest softening point is within the above range, it is possible to enhance the heat resistance of the molded article (specifically, to increase the deflection temperature under load, the softening point, and the like) without decreasing the processability of the resin composition. The reason is not clear, but it is considered that even when the molded article is heated to a temperature equal to or higher than the softening point, the molecular mobility of the natural fibers (B) is less likely to increase because modified polyolefin wax (CWL) is less likely to be detached from the surface of the natural fibers (B).

### (2) Petroleum Resin (C2)

A petroleum resin (C2) may be an aliphatic petroleum resin with a C5 fraction of tar naphtha as the main raw material, an aromatic petroleum resin with a C9 fraction as the main raw material, or a copolymerized petroleum resin thereof. That is, examples of the petroleum resin (C2) include C5 petroleum resin (resin obtained by polymerizing a C5 fraction of naphtha cracking oil), C9 petroleum resin (resin obtained by polymerizing a C9 fraction of naphtha cracking oil), and C5C9 copolymerized petroleum resin (resin obtained by copolymerizing a C5 fraction and a C9 fraction of naphtha cracking oil). When the compatibilizer (C) is the petroleum resin (C2), the kneadability of the compatibilizer (C) with other components is improved.

Further, as the petroleum resin (C2), one of the following may be used: coumarone-indene resins containing styrenes, indenes, coumarone, and other dicyclopentadienes in tar naphtha fractions, alkylphenol resins represented by condensation products of p-tertbutylphenol and acetylene, and xylene resins obtained by reacting o-xylene, p-xylene, and m-xylene with formalin. The petroleum resin (C2) may be produced using a raw material derived from biomass.

### (3) Other Compatibilizers (C3)

Further, a rosin-based resin and a terpene-based resin may be used as the compatibilizer (C).

Examples of the above rosin-based resin include natural rosin, polymerized rosin, and rosin derivatives such as phenol-modified rosin, esterified rosin, and hydrogenated rosin. The other compatibilizer (C3) may be produced using a raw material derived from biomass.

### 1-4. Processing Aid (D)

A processing aid (D) enhances the crystallinity of the thermoplastic resin (A) to improve the processability of the resin composition.

As the processing aid (D), a polyolefin wax, which is a material for the synthesis of the compatibilizer (C), can be used. For example, when the thermoplastic resin (A) is the polyolefin (A-1), it is preferable that the processing aid (D) is a resin different from the polyolefin (A-1) (when the polyolefin (A-1) is polyethylene, the processing aid (D) is polypropylene wax or the like, and when the polyolefin (A-1) is polypropylene, the processing aid (D) is polyethylene wax or the like). For example, the processing aid (D) is preferably polyethylene wax. The processing aid (D) may be produced using a raw material derived from biomass.

### 1-5. Other Components

The resin composition and the molded article may contain, as necessary, at least one of various additives known in the art, such as antioxidants, weather stabilizers, ultraviolet absorbers, antistatic agents, antislip agents, antiblocking agents, antifogging agents, nucleating agents, lubricants, pigments, dyes, aging inhibitors, hydrochloric acid absorbers, inorganic or organic fillers, organic or inorganic foaming agents, crosslinking agents, crosslinking aids, adhesives, softeners, flame retardants, and the like. The content of each of the above-described various additives is preferably 5% by mass or less, and more preferably 3% by mass or less, based on the total mass of the resin composition.

### 1-6. Composition Ratio

The resin composition and the molded article preferably contain a larger amount of the thermoplastic resin (A) from the viewpoint of enhancing the mechanical strength and heat resistance of the molded article. On the other hand, from the viewpoint of enhancing the impact resistance, flexibility, grip property, and impact absorption property of the molded article, it is preferable to increase the amount of components other than the thermoplastic resin (A) (particularly, the natural fibers (B)). From the viewpoint of balancing these properties, the resin composition and the molded article preferably have a ratio of the total mass of the thermoplastic resin (A) to the total mass (W) of the resin composition ((A)/(W)) of 0.01 or more, more preferably 0.1 or more, further preferably 0.3 or more, and particularly preferably 0.35 or more. Further, the ratio is preferably 0.99 or less, more preferably 0.9 or less, even more preferably 0.7 or less, and particularly preferably 0.5 or less. That is, the ratio is preferably 0.01 or more and 0.99 or less, more preferably 0.1 or more and 0.9 or less, further preferably 0.3 or more and 0.7 or less, and particularly preferably 0.35 or more and 0.5 or less.

Further, the resin composition and the molded article preferably have a ratio ((B)/(A)) of the total mass of the natural fibers (B) to the total mass of the thermoplastic resin (A)of preferably 0.01 or more and 10.00 or less, more preferably 0.10 or more and 5.00 or less, further preferably 0.25 or more and 2.00 or less, further preferably 0.30 or more and 1.50 or less, and particularly preferably 0.50 or more and 1.40 or less.

When the resin composition and the molded article include the compatibilizer (C), the processability of the resin composition, the appearance, the heat resistance, the impact resistance, and the wear resistance of the molded article increase as the amount of the compatibilizer (C) increases. On the other hand, by keeping the amount of the compatibilizer (C) within an appropriate range, it is possible to adjust the kneadability and heat resistance stability within an appropriate range, and it is also possible to make it difficult for smoke and odor to be generated during molding processing, and further to suppress the occurrence of eye boogers (burnt resin, low molecular weight components, and additives that adhere and accumulate near the outlet of the molding machine) and burning. From the viewpoint of balancing these properties, the resin composition and the molded article preferably have a ratio ((C)/(A)) of the total mass of the compatibilizer (C) to the total mass of the thermoplastic resin (A) of 0.005 or more and 1 or less, more preferably 0.008 or more and 0.8 or less, further preferably 0.01 or more and 0.6 or less, further preferably 0.012 or more and 0.5 or less, and particularly preferably 0.015 or more and 0.4 or less.

Further, from the same viewpoint, the resin composition and the molded article preferably have a ratio ((C)/(B)) of the total mass of the compatibilizer (C) to the total mass of the natural fibers (B) of 0.002 or more and 1 or less, more preferably 0.003 or more and 0.8 or less, further preferably 0.004 or more and 0.6 or less, further preferably 0.006 or more and 0.4 or less, and particularly preferably 0.008 or more and 0.3 or less.

Further, from the same viewpoint, the resin composition and the molded article preferably have a ratio ((C)/((A) + (B) + (C))) of the total mass of the compatibilizer (C) to the sum of the mass of the thermoplastic resin (A), the mass of the natural fibers (B), and the mass of the compatibilizer (C) of 0.002 or more and 0.8 or less, more preferably 0.005 or more and 0.7 or less, further preferably 0.008 or more and 0.1 or less, further preferably 0.012 or more and 0.09 or less, and particularly preferably 0.015 or more and 0.08 or less.

The resin composition and the molded article preferably contain a larger amount of the thermoplastic resin (A) from the viewpoint of enhancing the mechanical strength and heat resistance of the molded article. On the other hand, from the viewpoint of enhancing the impact resistance, flexibility, grip property, and impact absorption property of the molded article, it is preferable to increase the amount of components other than the thermoplastic resin (A). From the viewpoint of balancing these properties, the resin composition and the molded article preferably have a ratio ((A)/((A) + (B) + (C))) of the total mass of the thermoplastic resin (A) to the sum of the mass of the thermoplastic resin (A), the mass of the natural fibers (B), and the mass of the compatibilizer (C) of 0.01 or more and 0.99 or less, more preferably 0.1 or more and 0.9 or less, further preferably 0.2 or more and 0.8 or less, further preferably 0.3 or more and 0.7 or less, and particularly preferably 0.4 or more and 0.6 or less.

Further, from the same viewpoint, the resin composition and the molded article preferably have a ratio ((B)/((A) + (B) + (C))) of the total mass of the natural fibers (B) to the sum of the mass of the thermoplastic resin (A), the mass of the natural fibers (B), and the mass of the compatibilizer (C) of 0.01 or more and 0.99 or less, more preferably 0.1 or more and 0.9 or less, further preferably 0.2 or more and 0.8 or less, further preferably 0.3 or more and 0.7 or less, particularly preferably 0.4 or more and 0.6 or less, and most preferably 0.52 or more and 0.6 or less.

Further, from the same viewpoint, the resin composition and the molded article preferably have a ratio ((B)/((A) + B)) of the total mass of the natural fibers (B) to the sum of the mass of the thermoplastic resin (A) and the mass of the natural fibers (B) of 0.40 or more, more preferably 0.50 or more, further preferably 0.51 or more, and particularly preferably 0.52 or more. The upper limit value is not particularly limited, but may be, for example, 1.00 or less, 0.90 or less, or 0.80 or less. That is, the ratio ((B)/((A)+(B))) is preferably 0.40 or more and 1.00 or less, more preferably 0.50 or more and 0.90 or less, further preferably 0.51 or more and 0.90 or less, and particularly preferably 0.52 or more and 0.80 or less.

Further, from the viewpoint of enhancing the processability of the resin composition, the resin composition and the molded article preferably have a ratio ((D)/(W)) of the total mass of the processing aid (D) to the total mass (W) of the resin composition of 0.01 or more and 0.99 or less, more preferably 0.02 or more and 0.9 or less, and still more preferably 0.05 or more and 0.8 or less.

### 2. Method for Producing Resin Composition

The above-described resin composition can be produced by melt-kneading a thermoplastic resin (A) and natural fibers (B).

### 2-1. Melt-kneading

The melt-kneading is performed by kneading a thermoplastic resin (A), natural fibers (B), a compatibilizer (C), a processing aid (D), and other components while heating. Performing the melt-kneading in the presence of water allows obtainment of a molded article having the properties described above.

The materials described above can be used as the thermoplastic resin (A), the natural fibers (B), the compatibilizer (C), the processing aid (D), and other components. The natural fibers (B) are preferably in a powder form, but may be in a shape of fiber or paper. The average particle diameter of the natural fibers (B) in a powder form is not particularly limited, but is preferably 5 µm or more, more preferably 7 µm or more, and further preferably 15 µm or more from the viewpoint of enhancing the mechanical strength and the impact resistance of the molded article. Further, from the same viewpoint, the average particle diameter of the natural fibers (B) is preferably 500 µm or less, more preferably 100 µm or less, and still more preferably 60 µm or less. The average particle diameter of the natural fibers (B) is preferably 5 µm or more and 500 µm or less, more preferably 7 µm or more and 100 µm or less, further preferably 7 µm or more and 60 µm or less, and particularly preferably 15 µm or more and 60 µm or less.

The melt-kneading may be performed at a temperature at which the thermoplastic resin (A) melts, specifically, at a temperature higher than the melting point of the thermoplastic resin (A). Further, the melt-kneading may be performed at a temperature at which the natural fiber (B) is not modified, that is, a temperature at which significant coloring, burning, and carbonization do not occur in the natural fibers (B). Specifically, the melt-kneading is preferably performed at a temperature of 110°C or higher and 280°C or lower, and more preferably at a temperature of 130°C or higher and 220°C or lower.

In the present embodiment, by performing the melt-kneading in the presence of water, it is considered that the natural fibers (B), which are in an aggregated state prior to kneading, are disintegrated as the thermoplastic resin (A) dissolves due to the load of the shear force and the action of hot water (including a physical action and a chemical action (hydrolysis action) by hot water). Further, by the load of the shear force and the action of the hot water, each natural fiber (B) is released from the network-like entanglement with other the natural fibers (B), and changes its shape from that of paper to fiber. These actions allows the natural fibers (B) to disperse more uniformly in the thermoplastic resin (A) than in the related art.

Further, the melt-kneading is preferably performed in the presence of water in a subcritical state. The term "water in a subcritical state" refers to water in a high-temperature and high-pressure state that does not reach the critical point of water (temperature 374°C, pressure 22 MPa), and more specifically, water in a state where the temperature is equal to or higher than the boiling point of water at atmospheric pressure (100°C) and equal to or lower than the critical point of water, and the pressure is at least near the saturated vapor pressure. Water in a subcritical state has a larger ion product than water at atmospheric pressure at a temperature of 0°C or higher and 100°C or lower. Thus, it is presumed that the inter-molecular bonding of the natural fibers (B) is weakened, and the defibration of the natural fibers (B) is further promoted.

In the present embodiment, it is preferable to introduce the thermoplastic resin (A), the natural fibers (B), water, the compatibilizer (C), the processing aid (D), and other components into a sealed container that forms a closed space, and to stir these components vigorously. The heat generated by the stirring is used to raise the temperature in the casing to the above-described temperature, thereby melting the thermoplastic resin (A) and other resin components. The sealed container preferably includes an exhaust mechanism for discharging water vapor generated by the heat, while preventing air from the outside from entering. In the closed space, the mixture and water are kneaded intensely, enabling melt-kneading in the presence of water. On the other hand, by heating the kneaded material (resin composition) to convert the water into water vapor and discharging the water vapor to the outside, it is also possible to prevent water from remaining in the kneaded material (resin composition).

The natural fibers (B) generally absorbs water, and in a normal kneading method, the moisture in the resin composition cannot be discharged from the extruder, resulting in the moisture remaining in the extruder as water vapor. Consequently, the composition ratio of the natural fiber and the resin becomes unstable, and the mechanical strength becomes unstable in some cases. In the production method of the present invention, it is possible to efficiently discharge moisture as high-temperature vapor during the melt-kneading process. This allows the water content of the resulting resin composition to be sufficiently reduced to the desired level.

The melt-kneading in the closed space described above can be performed using a batch-type closed kneader (for example, a mixing and pulverizing apparatus described in WO2004/076044) including a cylindrical casing, a rotor having a plurality of stirring blades on its outer periphery, and an exhaust section that exhausts water vapor while maintaining the pressure of the casing.

**In** the batch-type closed kneader, the end time of the melt-kneading may be determined based on the measurement results from a thermometer and a pressure gauge attached inside the casing, or based on the rotation torque of the rotor. For example, it is preferable to end the stirring within 30 seconds from the time when the rotation torque rises to a maximum value and then falls, and the torque change rate becomes 5% or less per second.

### 3. Molding

The above-described resin composition can be molded to have a film shape, a plate shape, a prismatic shape, a cylindrical shape, or any other shape by extrusion molding, compression molding, injection molding, blow molding, transfer molding, cast molding, inflation molding, or the like. Among these, it is preferable to use the resin composition for the production of an injection-molded article with injection molding.

### 4. Application

The above-described molded article can be used, for example, as an exterior member such as an outdoor fence of a building, a wood deck, a pergola (grape trellis), a lattice, or the like, an interior member such as an inner wall material, a floor material, a ceiling material, a furniture material, or the like, or other playground equipment or the like.

Further, the above-described molded article can also be used as an impact absorption member. Examples of the impact absorption member include health products, nursing care products (e.g., fall prevention film, mat, and sheet), impact absorption pads, protectors and protective equipment (e.g., helmets and guards), sports products (e.g., sports grips), sports protective equipment, rackets, balls, transportation equipment (e.g., transportation impact absorption grips and impact absorption sheets), industrial materials (e.g., vibration damping pallets, impact absorption dampers, impact absorption members for footwear, impact absorption foams, and impact absorption films), and automotive impact absorption members (e.g., bumper impact absorption members and cushion members).

Further, the above-described molded article can be used for various applications such as: an automotive interior member such as an instrument panel, a console box, a meter cover, a door lock bezel, a steering wheel, a power window switch base, a center cluster, a dashboard, a roof lining, a cowl side trim, a door trim base material, a deck trim, an inner panel, a pillar garnish, a rear package, a package tray, a switch base, a quarter panel, a seat structural material, a seat backboard, a core material of an armrest, a ceiling base material, a wall material, a floor material, an impact absorbing material, a sound absorbing material, and the like; an automotive exterior member such as a weather strip, a bumper, a bumper guard, a side mud guard, a body panel, a cowling, a fender, a spoiler, a front grill, a strut mount, a wheel cap, a center pillar, a door mirror, a center ornament, a side mall, a door mall, a window mall, a window, a headlamp cover, a tail lamp cover, a windshield component, and the like; various front panels such as an AV equipment; a surface decorative material such as a button, an emblem, and the like; various components of a mobile phone such as a housing, a display window, a button, and the like; an exterior material for furniture; an architectural interior material such as a wall surface, a ceiling, a floor, and the like; an architectural exterior material such as an outer wall, a fence, a roof, a gate, a bargeboard, and the like; a surface decorative material for furniture such as a window frame, a door, a handrail, a threshold, a lintel, and the like; an optical member such as a display, a lens, a mirror, goggles, window glass, and the like; an interior and exterior member for various vehicles other than automobiles such as a train, an aircraft, a ship, and the like; and various packaging containers, packaging materials, premiums, small articles, and the like such as a bottle, a cosmetic container, a small article container, and the like.

Further, the above-described molded article is suitable for use in many fields such as electrical insulation materials, industrial component materials, construction materials, leisure members, agricultural tool members, and marine or fishing tool members. In particular, the molded article can be applied to a housing member or a building material such as a baseboard, a surface decorative board, a door material, an outer wall material, a washstand, a counter material, a foundation receiving board, a window frame, a wall material, a surrounding edge wood, a handrail, a handle, a structural material, a civil engineering square timber, a pillar, a floor pillar, a decorative pillar, a seismic material, a wallpaper building material, a ceiling material, a base material, a tatami mat, a floor, a concrete panel, a scaffold material, a shielding plate, a soundproof plate, a furniture box ceiling, a door, a front plate, a rear plate, a shelf plate, a sleeve plate, a curtain plate, a top plate, a back plate, a seat plate, a kitchen member, a waterproof material, a mold prevention material, a decay prevention material, a rain shutter plate, a sleeve plate, a waist plate, a side plate, a bath unit, a floor pan, a bath ceiling, a bath wall, a bath, a tub, a sanitary ware, a toilet seat, a toilet lid, a home appliance, a radio television receiver, a cabinet, a stereo cabinet, an amplifier cabinet, a speaker, a speaker box, a parent board of a piano or an organ, a large roof, a winding roof, an upper and lower winding board, a buoyancy body (foam) of a life jacket, a surfboard, a cold weather glove material, a fishing gear (float, decorative ball, fish gathering ball, lure), a camping gear, an agricultural film, a horticultural support, a support for a plastic greenhouse or a support fixing clip, a marine fender, a float, and the like.

Further, the above-described molded article can be used for a small moving means such as a bicycle or an electric assist bicycle, an escalator, an elevator, an aircraft material such as a manned aircraft, an unmanned aircraft, a supersonic passenger aircraft, a rocket, or an artificial satellite, a moving means such as a fuel cell vehicle, a hydrogen battery vehicle, or a linear motor car, various playground equipment, various members of a robot, a traffic light, an electric wire, a water pipe, a gas pipe, various infrastructures such as an optical fiber, a liquid crystal panel, a solar cell, an antenna, a transistor, an OA equipment interior, an OA equipment housing, a toilet lighting fixture, an umbrella, a raincoat, a heat insulating material, a floorboard, a paint, a barrier agent, a hydrophilic/hydrophobic control agent, a papermaking material, a tire, a damper, a hose, various rubber materials such as a vibration-proof rubber, a food/beverage container, a material for a 3D printer, an agricultural film, a liquid filter, an air filter, a semiconductor filter, various nonwoven fabric materials, a musical instrument, an acoustic material, a wig, a clock, a tombstone, glasses, sunglasses, a wearable terminal, and the like.

### Examples

Hereinafter, the invention will be described with reference to Examples. The scope of the present invention is not to be construed as being limited by Examples.

In the following experiments, the physical properties of each resin were measured by the methods below.

### 1. Preparation of Materials

### 1-1. Preparation of Thermoplastic Resin (A-1)

Prime Polypro (trade name) Grade J137G (polypropylene) manufactured by Prime Polymer Co., Ltd. was used as a thermoplastic resin (A-1).

### 1-2-1. Preparation of Natural Fiber (B-1)

KC FLOCK (trade name) Grade W-50GK (powder cellulose) (apparent specific gravity of 0.23 g/ml to 0.33 g/ml, average particle diameter of approximately 45 µm) manufactured by Nippon Paper Industries Co., Ltd. was used as natural fibers (B-1).

### 1-2-2. Preparation of Natural Fiber (B-2)

KC FLOCK (trade name) Grade W-100GK (powder cellulose) (apparent specific gravity of 0.30 g/ml to 0.40 g/ml, average particle diameter of approximately 37 µm) manufactured by Nippon Paper Industries Co., Ltd. was used as natural fibers (B-2).

### 1-3-1. Synthesis of Compatibilizer (C-1)

A stainless steel thermal decomposition apparatus (internal volume: 1.5 L) equipped with a stirring apparatus, a nitrogen introduction pipe, and a condenser was charged with 200 g of a propylene-ethylene copolymer (2.5% by mass of ethylene, MFR 40 g/10 min), and the system was sufficiently purged with nitrogen. Next, the thermal decomposition apparatus was heated to 380°C while nitrogen was still flowing in, causing the propylene-ethylene copolymer to melt. The propylene-ethylene copolymer was then subjected to heating for 2.5 hours, resulting in its thermal decomposition. Subsequently, the thermal decomposition apparatus was cooled to room temperature to obtain a polypropylene-based wax. Into a glass reactor, 500 g of the above polypropylene-based wax was placed, and was heated to 170°C under a nitrogen atmosphere to be melted. Next, 26 g of maleic anhydride and 5.5 g of di-t-butyl peroxide were continuously supplied to the above reactor over a period of 3 hours. Subsequently, the content of the reactor were subjected to a heating reaction for one hour. The content of the reactor were subjected to a degassing treatment in a 10 mmHg vacuum for 0.5 hours while maintaining the molten state to remove the volatile components, followed by cooling to obtain compatibilizer (C-1), which is an acid-modified polypropylene wax.

### 1-3-2. Synthesis of Compatibilizer (C-2)

A compatibilizer (C-2), which is an acid-modified polypropylene resin composition including maleic anhydride-modified polypropylene and unreacted maleic anhydride, was obtained by mixing 100 parts by mass of Prime Polypro (trade name) grade F327 (polypropylene) manufactured by Prime Polymer Co., Ltd., 1 part by mass of maleic anhydride (manufactured by Wako Pure Chemical Industries, Ltd.), and 0.25 parts by mass of 2,5-dimethyl-2,5-bis(tert-butylperoxy)hexane-3 (manufactured by NOF Corporation, trade name Perhexyne 25B), and extruding the mixture using a twin-screw kneader (manufactured by The Japan Steel Works, Ltd., TEX-30, L/D = 40, using a vacuum vent) at a cylinder temperature of 220°C, a screw rotation speed of 200 rpm, and a discharge rate of 80 g/min. The obtained compatibilizer (C-2) was dissolved in xylene, reprecipitated in acetone, and purified. The graft amount of maleic anhydride was measured by IR and found to be 0.7% by mass. The number average molecular weight (Mn) was measured by GPC and found to be Mn 28,000.

### 1-3-3. Synthesis of Compatibilizer (C-3)

A compatibilizer (C-3), which is an acid-modified polypropylene resin composition containing a maleic acid-modified polypropylene and an unreacted maleic anhydride, was obtained in the same manner as the synthesis of the compatibilizer (C-2) except that 100 parts by mass of Prime Polypro (trade name) grade J106G manufactured by Prime Polymer Co., Ltd., 15 parts by mass of maleic anhydride, and 2.5 parts by mass of dicumyl peroxide (manufactured by NOF Corporation, trade name Percumyl D) were mixed, and the reaction was performed in a toluene solution for 5 hours in the production of the above-described maleic acid-modified polypropylene (C-2). The obtained compatibilizer (C-3) was dissolved in xylene, reprecipitated in acetone, and purified. The graft amount of maleic anhydride was measured by IR and found to be 2.8% by mass. The number average molecular weight (Mn) was measured by GPC and found to be Mn 18,000.

### 1-4. Preparation of Processing Aid (D-1)

Olefin resin C-4 described in Examples of Japanese Patent Application Laid-Open No. 2010-150436 was used as a processing aid (D-1).

### 2. Preparation of Resin Composition

### 2-1. Resin Composition 1

The thermoplastic resin (A-1) and the natural fibers (B-1) were prepared in a mass ratio of 45:55 (sum of the masses: 4 kg).

To the prepared natural fibers (B-1), 4 kg of water was added, and the mixture was mixed until the entire mixture was thoroughly mixed. The mixture and the thermoplastic resin (A-1) were introduced into a batch-type closed kneading apparatus (manufactured by Hoden Seimitsu Kako Kenkyusho Co., Ltd., MF-type mixing and melting apparatus, model: MF5000R/L) including a casing and a rotor with stirring blades, and the materials were kneaded by high-speed stirring with a peripheral speed of 40 m/second at the tip of the stirring blade.

When the kneading was started, the rotation torque of the rotor increased to reach a maximum value, and then decreased while the rate of change in the torque became smaller. When the rate of change in torque became 5% or less per second, the rotation torque was considered to have reached a minimum, and the kneading was continued for 7 seconds from the time when the torque reached the minimum, thereby obtaining resin composition 1.

### 2-2. Resin Composition 2 to Resin Composition 10

Resin compositions 2 to 10 were obtained in the same manner as in Example 1, except that the composition ratio was changed as shown in Table 1 without changing the total mass of the materials charged into the kneading apparatus.

### 2-3. Resin Composition 11

The thermoplastic resin (A-1) and the natural fibers (B-1) were prepared in a mass ratio of 49:51 (sum of the masses: 4 kg).

The thermoplastic resin (A-1) and the natural fibers (B-1) were heated and kneaded at 200°C using a biaxial kneading extruder (manufactured by The Japan Steel Works, Ltd., TEX-30, L/D = 40) to obtain resin composition 11.

### 3. Evaluation

### 3-1. Preparation of Test Piece for Measurement

Resin composition 1 to resin composition 11 were each dried at 80°C for 15 hours. Subsequently, an injection molding machine in which a JIS7162-1B type mold for a dumbbell test piece (thickness 4 mm) was set was used to perform injection molding at a molding temperature of 180°C and a mold temperature of 80°C, and a test piece for measurement was obtained from each of resin composition 1 to resin composition 11.

The following measurements were performed on the measurement test pieces.

Further, for resin compositions 5, 9, and 11, the average fiber length and the maximum fiber length of the natural fibers (B) and the average size, number, and area (%) of the natural fibers (B) were measured without processing resin compositions 5, 9, and 11 into test pieces for measurements.

### 3-2. Average Fiber Length and Maximum Fiber Length of Natural Fibers (B)

An arbitrary portion of the test piece for physical property measurement was cut into 1 mm × 1 mm × 2 mm, and X-ray CT imaging was performed with a field of view of approximately 3 mm × 3 mm. The measurement apparatus was a high-resolution 3D X-ray microscope nano3DX (manufactured by Rigaku Corporation), and CT measurement was performed with low-energy, high-brightness X-rays that provide contrast even for light elements. The detailed measurement conditions are as follows.
X-ray target: Cu
X-ray tube voltage: 40 kV
X-ray tube current: 30 mA
Lens: 0.270 µm/pix
Binning: 1
Rotation angle: 180°
Number of projections: 1000
Exposure time: 60 seconds/sheet
Camera pixel count: 3300 × 2500

Using the obtained X-ray CT image, the fiber length of the natural fibers was measured in a range of 1,000 × 1,000 × 1,000 voxels at a pitch of 10 µm, and the average of the measured fiber lengths was defined as the average fiber length of the natural fibers (B), and the maximum value in the distribution of the fiber lengths was defined as the maximum fiber length.

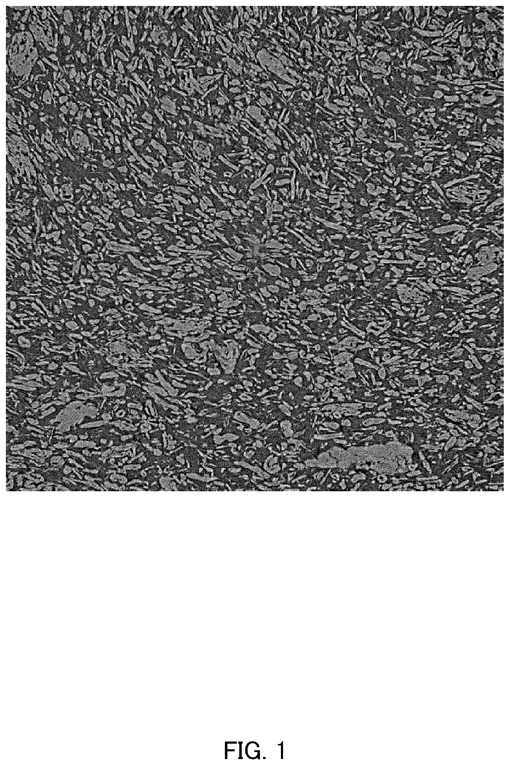

An X-ray CT image of the inj ection-molded article obtained from resin composition 1 is shown in FIG. 1.

### 3-3. Average Size, Number, and Area (%) of Natural Fibers (B)

A cross section (TD cross section) in a direction perpendicular to the flow direction of the resin during injection molding was cut out from the test piece for measurement, and a range of 1.8 mm × 1.2 mm in the TD cross section was observed by a high-resolution scanning electron microscope (SEM) with a working distance of 6.5 mm and a magnification of 75 times. In the enlarged image obtained by observation, the regions filled with the natural fibers (B) were painted black and the other regions were painted white to create a secondary image. The obtained secondary image was read into image analysis software (ImageJ), and the commands: Process, Binary, and Make Binary were executed to perform binarization image processing. The average size of the natural fibers (B) in the area of the observation field (Average Size of black regions), the number of the natural fibers (B) (Count of black regions), and the area% of the natural fibers (B) (Area Fraction of black regions) were calculated using the commands: Analyze and Analyze Particles.

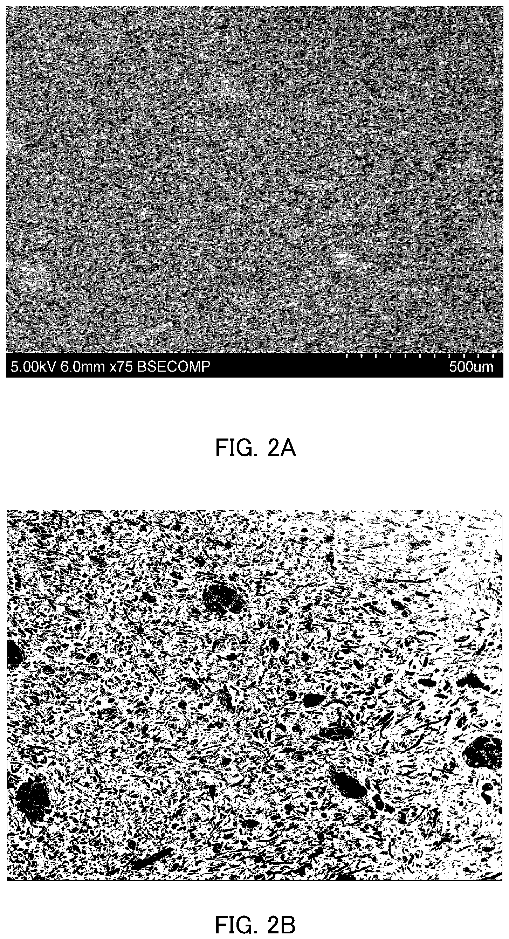

FIG. 2A illustrates an SEM image of a TD cross section of an injection-molded article obtained from resin composition 1, and FIG. 2B illustrates a secondary image obtained from FIG. 2A.

### 3-4. Charpy Impact Strength

A Charpy impact test was performed at room temperature in accordance with JIS K 7111-2 (2006) using a test piece cut out from the test piece for measurement and having dimensions of 10 mm (width) × 4 mm (thickness) × 80 mm (length).

### 3-5. Bending Test (Bending Strength and Bending Elastic Modulus)

In accordance with JIS K 7171 (2022), the bending strength and the bending elastic modulus were measured under the conditions of a load range of 200 N, a test speed of 2 mm/min, and a bending span of 64 mm.

### 3-6. Tensile Test (Tensile Strength and Tensile Elastic Modulus)

In accordance with JIS K 7161-2 (2014), the tensile strength and the tensile elastic modulus were measured under conditions of a load range of 2 kN and a test speed of 50 mm/min.

### 3-7. Appearance Quality (Sensory Evaluation)

Five researchers who handle resin compositions were gathered as sensory testers. A resin composition was placed on a smooth table, and a piece of paper painted black and a piece of paper painted white were placed next to the resin composition. The sensory testers then visually inspected the surface appearance of the resin composition and rated the surface color on a scale of 0 to 10, with white being given a score of 0 and black being given a score of 10. Then, the scores of the five sensory testers were averaged, and this average was used as the appearance quality in the evaluation. The lower the score, the better the appearance quality in the evaluation.

### 4. Results

The compositions of Resin Composition 1 to Resin Composition 12 and the evaluation results are shown in Tables 1 and 2. For resin composition 5, resin composition 9, and resin composition 11, the measurement results of the test pieces for measurement are shown as 5-1, 9-1, and 11-1, respectively, and the measurement results of the resin compositions that have not been processed are shown as 5-2, 9-2, and 11-2, respectively. Further, an SEM image of resin composition 2 is illustrated in FIG. 3.

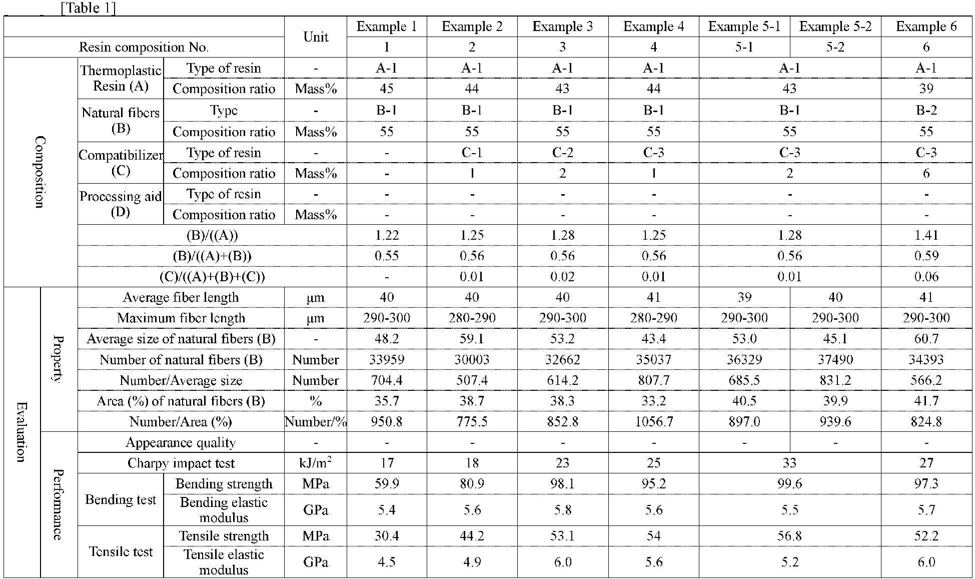

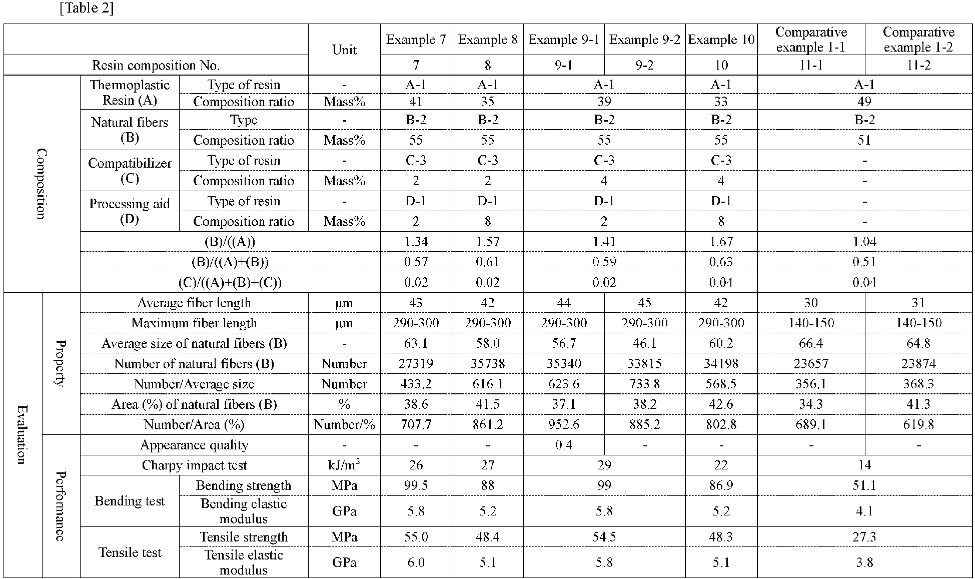

As is apparent from Tables 1 and 2, an injection-molded article including the thermoplastic resin (A) and the natural fibers (B) and having the following features was excellent in mechanical strength as compared with an injection-molded article that does not have the following features: the average fiber length of the natural fibers (B) as measured by imaging the injection-molded article by using X-ray computed tomography (X-ray CT) is 32 µm or more; and a ratio (number/average size) of the number of the natural fibers (B) to the average size (µm) of the natural fibers (B), as measured in an image obtained by imaging a range of 1.8 mm × 1.2 mm of a cross section of the injection-molded article in the TD direction by using a scanning electron microscope (SEM) at a working distance of 6.5 mm and a magnification of 75 times, is 400 or more.

Further, as is apparent from Tables 1 and 2, the properties relating to the fiber length and the distribution of the natural fibers (B) (average fiber length, maximum fiber length, average size, number, and area) did not significantly change before and after injection molding.

Further, as illustrated in FIG. 3, when a compatibilizer was used, the thermoplastic resin (A) adhered closely to the natural fibers (B).

The present application is entitled to and claims the benefit of Japanese Patent Application No. 2022-149291, filed on September 20, 2022. The specification, claims, and drawings of Japanese Patent Application No. 2022-149291, filed on September 20, 2022, are incorporated herein by reference.

### Industrial Applicability

The resin composition of the present invention can provide a molded article with excellent mechanical strength compared to conventional resin compositions in which natural fibers are dispersed in a resin. Therefore, the present invention is expected to expand the applicability of resin compositions including natural fibers to various applications and to contribute to the further spread of such resin compositions.

## Claims

1. A resin composition comprising:
a thermoplastic resin (A); and
a natural fiber (B), wherein
an average fiber length of the natural fiber (B) measured by imaging the resin composition by using X-ray computed tomography (X-ray CT) is 32 µm or more, and
a ratio (number/average size) of the number of the natural fibers (B) to an average size (µm) of the natural fiber (B) both measured in an image obtained by imaging a range of 1.8 mm × 1.2 mm of a cross section of the resin composition in a TD direction by using a scanning electron microscope (SEM) at a working distance of 6.5 mm and a magnification of 75 times is 400 or more.

2. The resin composition according to claim 1, wherein
a ratio (number/area) of the number of the natural fibers (B) to an area (%) occupied by the natural fiber (B) both measured in the image obtained by imaging the range of 1.8 mm × 1.2 mm of the cross section of the resin composition in the TD direction by using the SEM at the working distance of 6.5 mm and the magnification of 75 times is 700 or more.

3. The resin composition according to claim 1 or 2, wherein
a ratio ((B)/(A)) of a total mass of the natural fiber (B) to a total mass of the thermoplastic resin (A) is 0.01 or more and 10 or less.

4. The resin composition according to claim 1 or 2, wherein
a ratio ((B)/((A) + (B))) of a total mass of the natural fiber (B) to a sum of a mass of the thermoplastic resin (A) and a mass of the natural fiber (B) is 0.50 or more.

5. The resin composition according to claim 1 or 2, further comprising:
a compatibilizer (C) including a modified polyolefin (C1).

6. The resin composition according to claim 5, wherein
the modified polyolefin (C1) is an acid-modified polyolefin resin composition.

7. The resin composition according to claim 5, wherein
a ratio ((C)/((A) + (B) + (C))) of a total mass of the compatibilizer (C) to a sum of a mass of the thermoplastic resin (A), a mass of the natural fiber (B), and a mass of the compatibilizer (C) is 0.008 or more and 0.1 or less.

8. The resin composition according to claim 1 or 2, further comprising:
a processing aid (D) including a polyolefin wax (D1).

9. The resin composition according to claim 1 or 2, wherein
the natural fiber (B) includes a cellulose fiber.

10. The resin composition according to claim 9, wherein
a maximum fiber length of the natural fiber (B) measured by imaging the resin composition by using the X-ray computed tomography (X-ray CT) is 900 µm or less.

11. The resin composition according to claim 1 or 2, wherein
the thermoplastic resin (A) includes polyolefin.

12. The resin composition according to claim 1 or 2, wherein
a ratio ((A)/(W)) of a total mass of the thermoplastic resin (A) to a total mass (W) of the resin composition is 0.5 or less.

13. A molded article, wherein
the molded article is obtained by injection molding the resin composition according to claim 1 or 2.

14. A method for producing the resin composition according to claim 1 or 2, the method comprising:
melt-kneading the thermoplastic resin (A) and the natural fiber (B) using a batch-type closed kneading apparatus that includes a casing and a rotor including a stirring blade, wherein
the melt-kneading is performed in presence of water by raising a temperature inside the casing by rotation of the rotor to a temperature at which no modification of the natural fiber (B) occurs.
